# EUROPÄISCHE PATENTSCHRIFT

(11) **EP 4 556 745 B1**
(45) Veröffentlichungstag und Bekanntmachung des Hinweises auf die Patenterteilung: **05.08.2026**
(21) Anmeldenummer: 24211746.3
(22) Anmeldetag: 08.11.2024
(51) Int. Cl.: F16H 1/20

(54) **STELLANTRIEB MIT EINER STEUERUNGSEINHEIT ZUM STEUERN EINER HEMMUNGSEINHEIT**
ACTUATOR WITH A CONTROL UNIT FOR CONTROLLING AN INHIBITING UNIT
ACTIONNEUR AVEC UNE UNITÉ DE COMMANDE POUR COMMANDER UNE UNITÉ D'INHIBITION

(30) Priorität: 14.11.2023 DE 102023131714
(43) Veröffentlichungstag der Anmeldung: 21.05.2025
(73) Patentinhaber: Oechsler AG, 91522 Ansbach (DE)
(72) Erfinder: Welz, David, 91567 Herrieden (DE); Meierle, Robert, 91792 Ellingen (DE); Schmidt, Winfried, 91717 Wassertruedingen (DE)
(74) Vertreter: Canzler & Bergmeier Patentanwälte Partnerschaft mbB

(56) Entgegenhaltungen:
- EP-B1- 3 691 943
- CN-A- 102 069 790
- DE-A1- 10 149 479
- DE-A1- 102017 011 744
- US-A- 3 127 790

## Beschreibung

Die vorliegende Erfindung betrifft einen Stellantrieb für eine elektrische Baueinheit eines Kraftfahrzeuges, insbesondere für eine Parkbremse, einen Heckspoiler, ein Lenkrad, einen Sitz, ein Schiebedach, ein Fenster, eine Tür und/oder einen Kofferraumdeckel, mit einem Antriebsstrang, der ein, insbesondere nicht selbsthemmendes, Antriebsgetriebe und einen Antriebsmotor zum Antreiben des Antriebsgetriebes umfasst, mit einer Hemmungseinheit zum Hemmen des Antriebsstrangs, die ein selbsthemmendes Hemmungsgetriebe, das mit dem Antriebsgetriebe in Wirkverbindung steht, und einen Hemmungsmotor zum Antreiben des Hemmungsgetriebes umfasst, und mit einer Steuerungseinheit zum Steuern des Antriebsmotors und des Hemmungsmotors.

Aus der CN 102069790 A ist eine automatisch gesteuerte Druckhaltevorrichtung bekannt, die einen Dynamo, eine selbstsichernde Mutter und einen Zahnschieber umfasst, wobei der Dynamo die Mutter antreibt, welche den Zahnschieber vor- und zurückbewegt, um eine Zahneingriffsverbindung mit einem Bremsmotorgetriebe herzustellen.

Ein elektrischer Antrieb mit zwei Motoren ist aus der US 3,127,790 A1 bekannt. Ein erster Motor treibt eine Abtriebswelle direkt an. Ein zweiter Motor ist über eine elektromagnetisch betätigte Kupplung zuschaltbar. Steuermittel schalten zwischen Brems- und Kupplungsbetrieb um. Ein Untersetzungsgetriebe mit niedriger Abtriebsdrehzahl ist ebenfalls vorgesehen. Die Steuerung erlaubt das Umschalten zwischen den Motoren durch Trennung und Zuschaltung der jeweiligen Stromkreise.

Aus der EP 3 691 943 B1 ist eine mechanische Bremsvorrichtung bekannt, die eine Stellvorrichtung mit zwei Stelltriebsätzen aufweist, wobei jeweils über eine Antriebs- und Abtriebsseite ein Bremsmittel bewegbar ist. Eine Relativbewegung der Antriebsteile der beiden Stelltriebe bewirkt eine Bewegung des Bremsmittels.

Die DE 10 2017 011 744 A1 offenbart eine Vorrichtung mit Schneckengetriebe und rotatorischem Aktor, insbesondere einem Elektromotor, wobei das Schneckengetriebe eine rückwärtige Selbsthemmung aufweist. Die Rotorwelle des Aktors ist über eine Kupplung drehfest mit der Schnecke verbunden. Zum Lösen einer Arretierung ist ein drehrichtungsabhängiges Signal erforderlich. Die Verzahnungen sind so ausgelegt, dass stets ein minimales Zahnflankenspiel besteht. Beim Anlegen des Signals bewegt sich die Schneckenradwelle bis zur unbelasteten Zahnflanke. Der Aktor muss eine höhere Drehzahl als die resultierende Achsdrehzahl aufweisen, um die Reibungsmomente in Gleitlagern zu überwinden.

Aus der DE 101 49 479 A1 ist ein Stellantrieb für bewegliche Funktionsteile in Kraftfahrzeugen wie Fenster, Türen, Schiebedächer, Sitzverstellungen, elektrische Parkbremsen oder dergleichen bekannt. Der Stellantrieb umfasst einen Antriebsmotor und ein nachgeschaltetes, an das bewegliche Funktionsteil gekoppeltes Getriebe. Wenigstens ein Getriebeteil des Getriebes steht in einer ständigen Wirkverbindung mit einer zusätzlichen, von einem Antriebsmotor und einem Schneckenmotor synchron mit der Bewegung des Getriebeteils angetriebenen, selbsthemmend ausgelegten Schnecke. Nachteilig bei diesem Stellantrieb ist der sehr geringe Wirkungsgrad.

Aufgabe der vorliegenden Erfindung ist es somit, einen Stellantrieb zu schaffen, mit dem die aus dem Stand der Technik bekannten Nachteile beseitigt werden können, wobei der Stellantrieb vorzugsweise kompakt ist, kostengünstig ist, wartungsarm ist, langlebig ist und/oder einen hohen Wirkungsgrad aufweist.

Die Aufgabe wird gelöst durch einen Stellantrieb mit den Merkmalen der unabhängigen Patentansprüche.

Vorgeschlagen wird ein Stellantrieb für eine elektrische Baueinheit eines Kraftfahrzeuges. Die elektrische Baueinheit, für die der Stellantrieb einsetzbar ist, kann insbesondere eine Parkbremse, ein Heckspoiler, ein Lenkrad, ein Sitz, ein Schiebedach, ein Fenster, eine Tür und/oder ein Kofferraumdeckel sein. Vorzugsweise ist der Stellantrieb ein Parkbremsenstellantrieb, ein Heckspoilerstellantrieb, ein Lenkradstellantrieb, ein Sitzstellantrieb, ein Schiebedachstellantrieb, ein Fensterstellantrieb, ein Türstellantrieb und/oder ein Kofferraumdeckelstellantrieb. Der Stellantrieb weist einen Antriebsstrang auf. Der Antriebsstrang umfasst ein Antriebsgetriebe. Das Antriebsgetriebe ist insbesondere nicht selbsthemmend ausgebildet. Ferner weist das Antriebsgetriebe einen Antriebsmotor zum Antreiben des Antriebsgetriebes auf.

Des Weiteren umfasst der Stellantrieb eine Hemmungseinheit zum Hemmen des Antriebsstrangs. Diese Hemmungseinheit umfasst ein selbsthemmendes Hemmungsgetriebe, das mit dem Antriebsgetriebe in Wirkverbindung steht. Über diese Wirkverbindung kann das Hemmungsgetriebe das Antriebsgetriebe und den Antriebsmotor hemmen, insbesondere wenn der Antriebsmotor nicht bestromt ist. Außerdem weist die Hemmungseinheit einen Hemmungsmotor zum Antreiben des Hemmungsgetriebes auf. Auch weist der Stellantrieb eine Steuerungseinheit zum Steuern des Antriebsmotors und des Hemmungsmotors auf. Die Steuerungseinheit ist derart ausgebildet, dass der Antriebsmotor und der Hemmungsmotor, insbesondere in einem Startbetrieb, zeitversetzt betreibbar sind. Zusätzlich ist es vorteilhaft, wenn die Steuerungseinheit derart ausgebildet ist, dass der Antriebsmotor und der Hemmungsmotor, insbesondere in einem Startbetrieb, asynchron betreibbar sind. Vorteilhafterweise können der Antriebsmotor und der Hemmungsmotor von der Steuerungseinheit derart angesteuert werden, dass eine Blockade in dem Hemmungsgetriebe vermieden und/oder gelöst werden kann. Ein Vorteil ist, dass der Hemmungsmotor somit sehr klein und leistungsarm ausgelegt werden kann, was wiederum das Bauvolumen des Stellantriebs reduziert und die Herstellungskosten verringert.

Vorteilhaft ist es, wenn die Steuerungseinheit derart ausgebildet ist, dass der Antriebsmotor und der Hemmungsmotor, insbesondere im Normalbetrieb, synchron und/oder zeitgleich betreibbar sind.

Vorteilhaft ist es, wenn das Antriebsgetriebe zumindest ein drehbar gelagertes erstes Getriebeelement aufweist. Zusätzlich oder alternativ ist es vorteilhaft, wenn das Hemmungsgetriebe mindestens ein drehbar gelagertes zweites Getriebeelement aufweist. Das zweite Getriebeelement steht mit dem ersten Getriebeelement des Antriebsgetriebes vorzugsweise in Wirkverbindung. Das erste Getriebeelement des Antriebsgetriebes und das zweite Getriebeelement des Hemmungsgetriebes sind vorzugsweise um eine gemeinsame Drehachse drehbar gelagert.

Zusätzlich oder alternativ ist es vorteilhaft, wenn das erste Getriebeelement eine erste Verzahnung und das zweite Getriebeelement eine zur ersten Verzahnung unterschiedliche zweite Verzahnung aufweist.

Vorteilhaft ist es, wenn die zweite Verzahnung so ausgebildet ist, dass sie im Zusammenwirken mit einem dritten Getriebeelement eine Selbsthemmung des Hemmungsgetriebes ermöglicht. Diese vorteilhafte Ausgestaltung der zweiten Verzahnung in Kombination mit dem dritten Getriebeelement sorgt für eine effektive Selbsthemmung im Hemmungsgetriebe. Dies führt zu einer erhöhten Sicherheit und Zuverlässigkeit des gesamten Systems. Der Vorteil liegt in einer verbesserten Betriebssicherheit und damit einer erhöhten Anwenderfreundlichkeit.

Auch ist es vorteilhaft, wenn das Hemmungsgetriebe ein drittes Getriebeelement umfasst. Das dritte Getriebeelement weist vorzugsweise eine zur zweiten Verzahnung des zweiten Getriebeelements korrespondierende dritte Verzahnung auf. Durch die korrespondierende dritte Verzahnung des dritten Getriebeelements wird eine effiziente Übertragung der Kräfte und Bewegungen im Hemmungsgetriebe ermöglicht. Dies sorgt für eine optimale Leistung und Effizienz des Systems. Ein erhöhter Wirkungsgrad und eine verbesserte Langlebigkeit des Systems sind die resultierenden Vorteile.

Es ist vorteilhaft, wenn das zweite und dritte Getriebeelement, insbesondere unmittelbar, miteinander verzahnt sind. Die unmittelbare Verzahnung zwischen dem zweiten und dritten Getriebeelement führt zu einer direkten und effizienten Kraftübertragung. Dies ermöglicht eine höhere Leistung und einen geringeren Energieverlust. Die Vorteile sind eine verbesserte Energieeffizienz und reduzierte Betriebskosten.

Vorteilhaft ist es, wenn das Hemmungsgetriebe ein Schneckengetriebe umfasst oder ist. Das Schneckengetriebe weist eine Schnecke und ein Schneckenrad auf, wobei das Schneckenrad vorzugsweise das zweite Getriebeelement und/oder die Schnecke vorzugsweise das dritte Getriebeelement ausbildet. Ein Schneckengetriebe in der Hemmungseinheit bietet eine kompakte und effiziente Möglichkeit zur Umsetzung der Selbsthemmung.

In einer vorteilhaften Weiterbildung umfasst das Antriebsgetriebe ein viertes Getriebeelement. Das vierte Getriebeelement ist vorzugsweise um die gemeinsame Drehachse drehbar gelagert. Vorzugsweise ist das vierte Getriebeelement dem ersten Getriebeelement in Antriebsrichtung nachgelagert. Über das vierte Getriebeelement können nachgelagerte Getriebeelemente und/oder nachgelagerte Getriebestufen des Antriebsstrangs angetrieben werden. Alternativ kann das vierte Getriebeelement aber auch als Getriebeausgang ausgebildet sein.

Um den Stellantrieb möglichst bauraumsparend auszubilden, ist es vorteilhaft, wenn das erste Getriebeelement in Axialrichtung der gemeinsamen Drehachse zwischen dem zweiten und vierten Getriebeelement angeordnet ist.

Auch ist es vorteilhaft, wenn das erste, zweite und/oder vierte Getriebeelement gemeinsam als eine drehfeste Einheit ausgebildet sind. Die drehfeste Einheit kann in Umfangsrichtung und/oder Axialrichtung der gemeinsamen Drehachse spielbehaftet oder spielfrei ausgebildet sein. Demnach kann zwischen dem ersten, zweiten und/oder vierten Getriebeelement ein Spiel ausgebildet sein, so dass sich diese Getriebeelemente im Umfang des Spiels in Umfangsrichtung der gemeinsamen Drehachse zueinander verdrehen können. Eine drehfeste Einheit, die sich in sich im Rahmen eines Spiels verdrehen kann, ist im Sinne der vorliegenden Erfindung drehfest ausgebildet. Vorteilhaft ist es, wenn die drehfeste Einheit als Mehrfachzahnrad, insbesondere Doppelzahnrad oder Trippelzahnrad, ausgebildet ist. Hierdurch kann der Stellantrieb sehr kompakt und bauraumsparend ausgebildet werden.

Um den konstruktiven Aufwand des Stellantriebs zu reduzieren, ist es vorteilhaft, wenn das erste, zweite und/oder vierte Getriebeelement der drehfesten Einheit, insbesondere die gesamte drehfeste Einheit, einteilig, insbesondere materialeinteilig, ausgebildet ist.

Auch ist es vorteilhaft, wenn die drehfeste Einheit mehrteilig ausgebildet ist. In diesem Fall ist es vorteilhaft, wenn das erste, zweite und/oder vierte Getriebeelement der drehfesten Einheit miteinander verbunden sind. Diese Verbindung zwischen dem ersten, zweiten und/oder vierten Getriebeelement kann vorzugsweise lösbar und/oder unlösbar ausgebildet sein. Zusätzlich oder alternativ ist es vorteilhaft, wenn das erste, zweite und/oder vierte Getriebeelement form-, kraft- und/oder stoffschlüssig miteinander verbunden sind.

**In** einer vorteilhaften Weiterbildung der Erfindung ist zwischen dem drehfest miteinander verbundenen ersten und zweiten Getriebeelement ein Spiel ausgebildet, so dass sich das erste und zweite Getriebeelement gegeneinander in Umfangsrichtung der gemeinsamen Drehachse im Rahmen des Spiels verdrehen können. Hierdurch kann eine Beschädigung der Getriebeelemente vermieden werden, insbesondere wenn das Antriebsgetriebe und das Hemmungsgetriebe asynchron zueinander betrieben werden.

Vorteilhaft ist es, wenn das erste und zweite Getriebeelement über eine, insbesondere spielbehaftete oder spielfreie, Passfederverbindung miteinander verbunden sind. Hierdurch kann eine drehfeste Verbindung zwischen dem ersten und zweiten Getriebeelement sehr kostengünstig und präzise ausgebildet werden.

In einer vorteilhaften Weiterbildung der Erfindung umfasst der Stellantrieb ein Gehäuse. Vorzugsweise ist die drehfeste Einheit in dem Gehäuse angeordnet. Zusätzlich oder alternativ ist es vorteilhaft, wenn die drehfeste Einheit gegenüber dem Gehäuse drehbar gelagert ist. Zusätzlich oder alternativ ist es vorteilhaft, wenn der Stellantrieb zumindest ein Trägerelement umfasst. Das Trägerelement kann in dem Gehäuse angeordnet und/oder mit diesem, insbesondere lösbar, verbunden sein.

Auch ist es vorteilhaft, wenn der Stellantrieb zumindest ein Lagerelement, insbesondere eine Achse, eine Welle und/oder einen Lagerstift, umfasst. Vorzugsweise ist die drehfeste Einheit über das zumindest eine Lagerelement in zumindest einem Lagerbereich, insbesondere des Gehäuses und/oder des Trägerelements, gelagert. Hierbei ist die drehfeste Einheit vorzugsweise drehbar um die gemeinsame Drehachse gelagert.

Vorzugsweise weist der Stellantrieb eine Abtriebswelle auf, die insbesondere durch das vierte Getriebeelement ausgebildet ist. Alternativ ist es vorteilhaft, wenn die Abtriebswelle, insbesondere unmittelbar oder über zumindest ein fünftes Getriebeelement mittelbar, mit der drehfesten Einheit, insbesondere mit dem ersten oder vierten Getriebeelement, in Wirkverbindung steht.

Vorteilhaft ist es, wenn der Antriebsmotor in dem Gehäuse angeordnet ist. Auch ist es vorteilhaft, wenn der Antriebsmotor dem Antriebsgetriebe vorgelagert ist und/oder mit dem Antriebsgetriebe, insbesondere mit dem ersten Getriebeelement, in Wirkverbindung steht. Über den Antriebsmotor kann eine Antriebskraft über das Antriebsgetriebe auf die Abtriebswelle übertragen werden.

Um die Antriebskraft vom Antriebsmotor auf das Antriebsgetriebe übertragen zu können, ist es vorteilhaft, wenn das Antriebsgetriebe einen Motorritzel umfasst, das auf einer ersten Motorwelle des Antriebsmotors drehfest angeordnet ist. Zusätzlich oder alternativ ist es vorteilhaft, wenn das Motorritzel, insbesondere unmittelbar oder mittelbar, mit dem ersten Getriebeelement in Wirkverbindung steht.

In einer vorteilhaften Weiterbildung der Erfindung steht das Motorritzel mittelbar über zumindest ein sechstes Getriebeelement, insbesondere über ein Zahnrad, einen Riemen und/oder ein Winkelgetriebe, mit dem ersten Getriebeelement in Wirkverbindung.

Vorteilhaft ist es, wenn das erste, zweite, vierte, fünfte und/oder sechste Getriebeelement als Zahnrad ausgebildet ist.

Vorteilhaft ist es, wenn der Hemmungsmotor in dem Gehäuse angeordnet ist. Auch ist es vorteilhaft, wenn der Hemmungsmotor dem Hemmungsgetriebe vorgelagert ist und/oder mit dem Hemmungsgetriebe, insbesondere mit dem zweiten und/oder dritten Getriebeelement, in Wirkverbindung steht.

Vorteilhaft ist es, wenn der Hemmungsmotor eine zweite Motorwelle umfasst und/oder wenn das dritte Getriebeelement, insbesondere unmittelbar, auf dieser zweiten Motorwelle drehfest angeordnet ist. Hierdurch kann der Stellantrieb sehr kompakt ausgebildet werden.

Vorteilhaft ist es, wenn nur der Antriebsmotor und nicht der Hemmungsmotor zum Antreiben und Stellen des Stellantriebs ausgebildet ist. In diesem Zusammenhang ist es vorteilhaft, wenn der Hemmungsmotor im Vergleich zum Antriebsmotor kleiner ist und/oder eine kleinere elektrische Leistung aufweist.

Diesbezüglich ist es auch vorteilhaft, wenn der Hemmungsmotor derart klein ist und/oder eine derart kleine elektrische Leistung aufweist, dass im bestimmungsgemäßen Gebrauch eine Blockade des Hemmungsgetriebes nur mit Unterstützung des Antriebsmotors lösbar ist. Bei einer Blockade ist vorzugsweise das zweite Getriebeelement, insbesondere das Schneckenrad, und das dritte Getriebeelement, insbesondere die Schnecke, miteinander verkeilt.

Um den Stellantrieb möglichst platzsparend ausbilden zu können, ist es vorteilhaft, wenn die erste Motorwelle des Antriebsmotors parallel zu der gemeinsamen Drehachse und/oder von dieser radial beabstandet angeordnet ist.

Zusätzlich oder alternativ ist es vorteilhaft, wenn die zweite Motorwelle des Hemmungsmotors, vorzugsweise in zumindest einer Ansicht, schräg, insbesondere lotrecht, zu der gemeinsamen Drehachse und/oder zu der zweiten Motorwelle des Antriebsmotors angeordnet ist.

Ferner ist es vorteilhaft, wenn die zweite Motorwelle des Hemmungsmotors windschief zu der gemeinsamen Drehachse und/oder zu der ersten Motorwelle des Antriebsmotors angeordnet ist. Hierdurch kann der Stellantrieb sehr bauraumsparend ausgebildet werden.

Vorzugsweise ist die Steuerungseinheit eine Stellantriebs-Steuerungseinheit. Hierbei bildet die Stellantriebs-Steuerungseinheit vorzugsweise mit dem Gehäuse des Stellantriebs eine bauliche Einheit und/oder ist in dieses Gehäuse integriert. Alternativ ist es vorteilhaft, wenn die Steuerungseinheit eine Baueinheit-Steuerungseinheit ist. Hierbei sind die Baueinheit-Steuerungseinheit und das Gehäuse voneinander baulich getrennt. Bei der Baueinheit-Steuerungseinheit kann es sich demnach um eine Steuerungseinheit eines übergeordneten Systems, beispielsweise einer Parkbremse und/oder eines Kraftfahrzeuges, handeln.

Vorteilhaft ist es, wenn der Stellantrieb derart ausgebildet ist, dass der Antriebsmotor und der Hemmungsmotor separat voneinander und/oder unabhängig voneinander von der Steuerungseinheit ansteuerbar und/oder bestrombar ist. Zusätzlich oder alternativ ist es vorteilhaft, wenn der Antriebsmotor und der Hemmungsmotor jeweils eine eigene Stromzufuhr und/oder eine eigene Spannungszufuhr aufweisen.

In einer vorteilhaften Weiterbildung der Erfindung ist die Steuerungseinheit derart ausgebildet, dass der Antriebsmotor und der Hemmungsmotor in zumindest einem Startbetrieb zum Vermeiden und/oder zum Lösen einer Blockade des Hemmungsgetriebes betreibbar sind. Die Blockade ist im bestimmungsgemäßen Gebrauch insbesondere zwischen dem zweiten und dritten Getriebeelement ausgebildet, wobei vorzugsweise eine Zahnflanke des dritten Getriebeelements mit einer korrespondierenden Zahnflanke des zweiten Getriebeelements blockiert ist. Vorzugsweise ist die Steuerungseinheit derart ausgebildet, dass diese den Antriebsmotor und den Hemmungsmotor insbesondere beim erneuten Starten nach einem Stillstand und/oder bei einer Drehrichtungsumkehr des Stellantriebs, insbesondere zuerst, in dem zumindest einen Startbetrieb zum Vermeiden und/oder Lösen einer Blockade des Hemmungsgetriebes betreiben kann. Zusätzlich oder alternativ ist die Steuerungseinheit derart ausgebildet, dass der Antriebsmotor und der Hemmungsmotor in einem Normalbetrieb zum Stellen der Baueinheit betreibbar sind.

Vorteilhaft ist es, wenn die Steuerungseinheit derart ausgebildet ist, dass der Antriebsmotor und der Hemmungsmotor, insbesondere im Startbetrieb, asynchron und/oder, insbesondere im Normalbetrieb, synchron betreibbar sind. Bei einem synchronen Betrieb bewegen sich, insbesondere miteinander korrespondierende, Getriebeelemente des Antriebsgetriebes und des Hemmungsgetriebes synchron zueinander. Bei einem asynchronen Betrieb bewegen sich diese asynchron zueinander.

Gemäß einer vorteilhaften Weiterbildung der Erfindung ist die Steuerungseinheit derart ausgebildet, dass diese im Normalbetrieb den Hemmungsmotor, insbesondere in Abhängigkeit des Antriebsmotors, derart betreibt, dass eine erste Zahnflanke des dritten Getriebeelements einer korrespondierenden zweiten Zahnflanke des zweiten Getriebeelements, insbesondere beabstandet, vorauseilt. Zusätzlich oder alternativ ist es vorteilhaft, wenn die Steuerungseinheit derart ausgebildet ist, dass diese im Normalbetrieb den Hemmungsmotor, insbesondere in Abhängigkeit des Antriebsmotors, derart betreibt, dass eine zweite Zahnflanke des dritten Getriebeelements einer korrespondierenden zweiten Zahnflanke des zweiten Getriebeelements, insbesondere beabstandet, nacheilt. Hierdurch werden Reibungsverluste im Hemmungsgetriebe vermieden, so dass der Wirkungsgrad des Stellantriebs erhöht wird.

Vorteilhaft ist es, wenn die Steuerungseinheit derart ausgebildet ist, dass diese den Stellantrieb in mehreren Startbetrieben zum Vermeiden und/oder Lösen der Blockade des Hemmungsgetriebes betreiben kann. Diesbezüglich ist es vorteilhaft, wenn die Steuerungseinheit derart ausgebildet ist, dass diese in einem ersten Startbetrieb zum Vermeiden und/oder Lösen der Blockade des Hemmungsgetriebes zuerst den Hemmungsmotor bestromt und erst nach einem ersten Zeitfenster, insbesondere zusätzlich, den Antriebsmotor bestromt. Hierfür ist es vorteilhaft, wenn das erste Zeitfenster, insbesondere als entsprechender Wert, in der Steuerungseinheit abgespeichert und/oder von der Steuerungseinheit festgelegt ist.

Zusätzlich oder alternativ ist es vorteilhaft, wenn die Steuerungseinheit derart ausgebildet ist, dass der Hemmungsmotor im ersten Startbetrieb zuerst derart bestromt wird, dass das dritte Getriebeelement in eine Drehrichtung gedreht wird, die zu einer geplanten Stellbewegung des Stellantriebs korrespondiert. Vorzugsweise bewegt sich hierdurch diejenige Zahnflanke des dritten Getriebeelements, die sich benachbart zur oder im Kontakt mit der korrespondierenden Zahnflanke des zweiten Getriebeelements befindet, von dieser korrespondierenden Zahnflanke des zweiten Getriebeelements weg. Vorteilhafterweise kann hierdurch eine Kollision zwischen dem zweiten und dritten Getriebeelement vermieden werden, wenn der Antriebsmotor bestromt wird. Auch kann eine Blockade zwischen dem zweiten und dritten Getriebeelement gelöst werden, in dem das dritte Getriebeelement wegbewegt wird.

In einer vorteilhaften Weiterbildung der Erfindung ist die Steuerungseinheit derart ausgebildet, dass der Antriebsmotor im ersten Startbetrieb nach dem ersten Zeitfenster derart bestromt wird, dass das zweite Getriebeelement in eine Drehrichtung gedreht wird, die zu der geplanten Stellbewegung des Stellantriebs korrespondiert.

Vorzugsweise eilt hierdurch die Zahnflanke des zweiten Getriebeelements der korrespondierenden und sich wegbewegenden Zahnflanke des dritten Getriebeelements nach.

Auch ist es in diesem Zusammenhang vorteilhaft, wenn das erste Zeitfenster derart festgelegt ist und/oder derart von der Steuerungseinheit bestimmt wird, dass die Drehung des zweiten Getriebeelements beginnt, bevor die andere, sich hinbewegende Zahnflanke des dritten Getriebeelements mit der korrespondierenden Zahnflanke des zweiten Getriebeelements kollidiert. Hierdurch wird eine Kollision zwischen den Zahnflanken des zweiten Getriebeelements vermieden.

Die Steuerungseinheit ist derart ausgebildet, dass diese in einem zweiten Startbetrieb zum Vermeiden und/oder Lösen der Blockade des Hemmungsgetriebes zuerst den Antriebsmotor ansteuert, insbesondere bestromt, und erst nach einem zweiten Zeitfenster zusätzlich den Hemmungsmotor ansteuert, insbesondere bestromt. Vorzugsweise ist ein entsprechender Wert des zweiten Zeitfensters in der Steuerungseinheit abgespeichert und/oder von der Steuerungseinheit bestimmt und/oder festgelegt. Zusätzlich oder alternativ ist es vorteilhaft, wenn die Steuerungseinheit derart ausgebildet ist, dass diese im zweiten Startbetrieb gleichzeitig mit oder nach dem Ansteuern und/oder Bestromen des Hemmungsmotors die Drehrichtung des Antriebsmotors umkehrt.

In diesem Zusammenhang ist es vorteilhaft, wenn die Steuerungseinheit derart ausgebildet ist, dass der Antriebsmotor im zweiten Startbetrieb zuerst derart angesteuert, insbesondere bestromt, wird, dass das zweite Getriebeelement in eine Drehrichtung gedreht wird, die zu der geplanten Stellbewegung des Stellantriebs korrespondiert oder zu dieser entgegengesetzt ist. Vorzugsweise bewegt sich hierdurch diejenige Zahnflanke des zweiten Getriebeelements, die sich benachbart zu oder im Kontakt mit der korrespondierenden Zahnflanke des dritten Getriebeelements befindet, von der korrespondierenden Zahnflanke des dritten Getriebeelements weg, so dass vorzugsweise eine Blockade gelöst wird.

Auch ist es vorteilhaft, wenn die Steuerungseinheit derart ausgebildet ist, dass der Antriebsmotor im zweiten Startbetrieb - wenn das zweite Getriebeelement in eine zur geplanten Stellbewegung des Stellantriebs entgegengesetzte Drehrichtung gedreht wurde - anschließend derart angesteuert, insbesondere bestromt, wird, dass sich seine Drehrichtung umkehrt. Hierdurch dreht sich das zweite Getriebeelement vorzugsweise in die zur geplanten Stellbewegung des Stellantriebs korrespondierende Drehrichtung.

Vorteilhaft ist es, wenn die Steuerungseinheit derart ausgebildet ist, dass diese den Hemmungsmotor im zweiten Startbetrieb nach dem zweiten Zeitfenster derart bestromt, dass das dritte Getriebeelement in eine Drehrichtung gedreht wird, die zu der geplanten Stellbewegung des Stellantriebs korrespondiert, so dass die Zahnflanke des dritten Getriebeelements der korrespondierenden und sich wegbewegenden Zahnflanke des zweiten Getriebeelements nacheilt.

Auch ist es vorteilhaft, wenn die Steuerungseinheit derart ausgebildet ist, dass das zweite Zeitfenster derart festgelegt ist und/oder derart von der Steuerungseinheit bestimmt wird, dass die Drehung des dritten Getriebeelements beginnt, bevor die andere, sich hinbewegende Zahnflanke des zweiten Getriebeelements mit der korrespondierenden Zahnflanke des dritten Getriebeelements kollidiert.

Auch bringt es Vorteile mit sich, wenn die Steuerungseinheit derart ausgebildet ist, dass diese den Antriebsmotor und den Hemmungsmotor nach jedem Stillstand und/oder bei jeder Drehrichtungsumkehr des Stellantriebs zuerst im Startbetrieb und/oder anschließend im Normalbetrieb betreibt.

Vorteilhaft ist es, wenn in der Steuerungseinheit ein Stromgrenzwert des Antriebsmotors und/oder des Hemmungsmotors hinterlegt ist. Zusätzlich oder alternativ ist es vorteilhaft, wenn die Steuerungseinheit derart ausgebildet ist, dass diese den Antriebsmotor und den Hemmungsmotor im Startbetrieb betreibt, wenn der zumindest eine Stromgrenzwert überschritten wurde. Zusätzlich oder alternativ ist es vorteilhaft, wenn die Steuerungseinheit derart ausgebildet ist, dass diese den Antriebsmotor und den Hemmungsmotor nach einem Stillstand und/oder nach einer Drehrichtungsumkehr des Stellantriebs und/oder insbesondere nur dann im Startbetrieb betreibt, wenn der zumindest eine Stromgrenzwert, insbesondere unmittelbar nach dem Start, unmittelbar nach der Drehrichtungsumkehr und/oder unmittelbar vor dem letzten Stillstand, überschritten wurde.

Vorteilhaft ist es, wenn die Hemmungseinheit zumindest einen Sensor, insbesondere einen Drehwinkelsensor und/oder einen Endlagesensor, umfasst. Vorzugsweise ist der Sensor derart ausgebildet, dass mit diesem, insbesondere mittelbar oder unmittelbar, eine Relativposition zwischen der zweiten Verzahnung des zweiten Getriebeelements und der dritten Verzahnung des dritten Getriebeelements und/oder eine Blockade erfassbar und/oder ermittelbar ist.

In einer vorteilhaften Weiterbildung der Erfindung ist der zumindest eine Sensor am Hemmungsmotor angeordnet. Zusätzlich oder alternativ ist der zumindest eine Sensor und/oder die Steuerungseinheit derart ausgebildet, dass eine Stellung des zweiten und/oder dritten Getriebeelements, das vorzugsweise zwischen zwei Endanschlägen in einem Stellungsbereich verstellbar ist, ermittelbar ist.

Vorteilhaft ist es, wenn in der Steuerungseinheit zumindest ein Startbetriebsbereich für das zweite und/oder dritte Getriebeelement hinterlegt ist, der einen Teilbereich des Stellbereichs bildet. Zusätzlich oder alternativ ist es vorteilhaft, wenn die Steuerungseinheit derart ausgebildet ist, dass diese den Antriebsmotor und den Hemmungsmotor, insbesondere nur dann, im Startbetrieb betreibt, wenn eine über den Sensor erfasste ist-Stellung des zweiten und/oder dritten Getriebeelements innerhalb des hinterlegten Startbetriebsbereichs ist.

In einer vorteilhaften Weiterbildung der Erfindung ist der Sensor derart ausgebildet, dass mit diesem eine erste Relativposition zwischen einer ersten Zahnflanke des dritten Getriebeelements und einer korrespondierenden ersten Zahnflanke des zweiten Getriebeelements erfassbar ist. Zusätzlich oder alternativ ist der zumindest eine Sensor derart ausgebildet, dass eine zweite Relativposition zwischen einer zweiten Zahnflanke des dritten Getriebeelements und einer korrespondierenden zweiten Zahnflanke des zweiten Getriebeelements erfassbar ist.

Vorgeschlagen wird ferner ein Verfahren zum Betreiben eines Stellantriebs. Der Stellantrieb ist vorzugsweise gemäß der vorangegangenen Beschreibung ausgebildet, wobei die genannten Merkmale einzeln oder in beliebiger Kombination vorhanden sein können.

Vorteilhaft ist es, wenn der Stellantrieb und/oder das Verfahren gemäß der nachfolgenden Beschreibung ausgebildet ist, wobei die genannten Merkmale einzeln oder in beliebiger Kombination vorhanden sein können. Vorzugsweise weist der Stellantrieb, der insbesondere in einem Fahrzeug eingesetzt wird, eine selbsthemmende Funktion und/oder einen hohen Wirkungsgrad auf. Der Stellantrieb muss nach dem Einsatz der selbsthemmenden Funktion nicht gewartet oder anderweitig wieder aus der Sperrfunktion gelöst werden, sondern ist voll funktionsfähig. Der Stellantrieb umfasst einen, insbesondere großen, Antriebsmotor und/oder einen, insbesondere kleinen Hemmungsmotor. Der große Antriebsmotor treibt mit seinem Motorritzel das erste Getriebeelement an. Das Motorritzel und das erste Getriebeelement sind nicht selbsthemmend ausgelegt. Der Hemmungsmotor treibt das selbsthemmende dritte Getriebeelement, insbesondere die Schnecke, an. Der, insbesondere kleine, Hemmungsmotor mit seiner Schnecke setzt die selbsthemmende Funktion im Stellantrieb um. Der Hemmungsmotor und die Schnecke sind so ausgelegt, dass sie beim Betrieb des Antriebsmotors mit dem Antriebsgetriebe schnell genug mitlaufen, und/oder, soweit es das Getriebespiel erlaubt, etwas vorauszueilen, ohne dabei etwas zum Antrieb am Getriebeausgang beizutragen, so dass sie das Antriebsgetriebe nicht ausbremsen und/oder unbeabsichtigt plötzlich sperren. Der Hemmungsmotor und das dritte Getriebeelement, insbesondere die Schnecke, sind vorzugsweise nicht dafür ausgelegt, zusätzlich das Antriebsgetriebe mit anzutreiben.

Der Hemmungsmotor und das dritte Getriebeelement, insbesondere die selbsthemmende Schnecke, sind vom Antriebsgetriebe nicht abgekoppelt, sondern dauerhaft mit diesem in Wirkverbindung.

Aufgrund der Verzahnungsgeometrie ist es so gut wie unmöglich, dass das Motorritzel und das dritte Getriebeelement, insbesondere die selbsthemmende Schnecke, in die gleiche Verzahnung eingreifen können und gemeinsam über die eine gleiche Verzahnungsgeometrie das gleiche Zahnrad antreiben. Aufgrund dessen treibt der Antriebsmotor mit seinem Motorritzel vorzugsweise das erste Getriebeelement und der Hemmungsmotor mit seinem dritten Getriebeelement, insbesondere seiner Schnecke, das zweite Getriebeelement, insbesondere das Schneckenrad, an. Hierfür ist das erste Getriebeelement, insbesondere ein Stirnrad, und das zweite Getriebeelement, insbesondere das Schneckenrad, miteinander weitestgehend drehfest miteinander verbunden. Dies bedeutet, dass bei einer einteiligen Ausführung des ersten und zweiten Getriebeelements die beiden drehfest miteinander verbunden sind. Bei einer mehrteiligen Ausführung des ersten und zweiten Getriebeelements kann eine drehfeste Verbindung zwischen diesen mit oder ohne Spiel ausgebildet sein.

Das erste und zweite Getriebeelement können gemeinsam einteilig oder mehrteilig ausgebildet sein. Wenn das erste und zweite Getriebeelement mehrteilig ausgebildet sind, können die beiden drehfest ohne Spiel miteinander verbunden sein, z. B. durch ein Verpressen oder einen Formschluss. Es kann aus Toleranzgründen aber auch vorteilhaft sein, wenn das erste und zweite Getriebeelement drehfest, aber mit einem Spiel miteinander verbunden sind. Das heißt, dass das Spiel nur eine gewisse Drehung des zweiten Getriebeelements relativ zum ersten Getriebeelement zulässt. Dies kann z. B. durch eine Nabe des ersten Getriebeelements und eine etwas größere Nut am zweiten Getriebeelement ausgebildet sein. Nabe und Nut können aber auch am jeweils anderen Bauteil ausgebildet sein. Es können mehrere korrespondierende Naben und Nuten an den beiden Bauteilen ausgebildet sein.

Falls der Stellantrieb für Anwendungsfälle eingesetzt wird, bei denen eine hohe Untersetzung benötigt wird und/oder wenig Bauraum vorhanden ist, wie z. B. beim Einsatz für eine elektrische Parkbremse, kann ein viertes Getriebeelement drehfest mit dem ersten Getriebeelement und/oder dem zweiten Getriebeelement, insbesondere dem Schneckenrad, verbunden sein. Diese bilden dann gemeinsam ein Tripelzahnrad. Das Tripelzahnrad umfasst vorzugsweise das Schneckenrad, ein als erstes Getriebeelement ausgebildetes Stirnrad und ein weiteres als viertes Getriebeelement ausgebildetes Stirnrad. Diese können jeweils oder gemeinsam mehrteilig oder einteilig ausgebildet sein. Beim Tripelzahnrad treibt das vierte Getriebeelement die nächstfolgende Getriebestufe an.

In einer alternativen Ausführung, wenn z. B. keine große Untersetzung benötigt wird, können das zweite Getriebeelement, insbesondere das Schneckenrad, und das erste Getriebeelement als Doppelzahnrad ausgebildet sein. In diesem Fall treibt das erste Getriebeelement die nächste Getriebestufe oder den Getriebeausgang an.

Das Tripel- oder das Doppelzahnrad ist vorzugsweise über einen Lagerstift im und/oder an dem Gehäuse oder anderen Bauteilen, wie beispielsweise einem Trägerelement und/oder einer Trägerplatte, gelagert. Hierbei kann der Lagerstift drehfest in seiner Lagerstelle gelagert sein. Alternativ kann der Lagerstift drehfest mit dem Tripel- oder Doppelzahnrad verbunden sein. In diesem Fall ist er drehbar in seiner zumindest einen Lagerstelle des Gehäuses oder eines Gehäuseteils gelagert.

Alternativ zu dem zumindest einen Lagerstift kann eine Welle eingesetzt werden, auf der das Doppelzahnrad drehfest angeordnet ist. Diese Welle kann die Abtriebswelle des Stellantriebs ausbilden. Die ist insbesondere bei einem Doppelzahnrad von Vorteil, wobei vorzugsweise darauffolgend keine weitere Untersetzung erfolgt.

Vorteilhaft ist es, wenn das erste Getriebeelement, welches Bestandteil des Tripel- oder Doppelzahnrades ist, nicht direkt bzw. unmittelbar als Getriebestufe auf den Antriebsmotor und/oder das Motorritzel folgen muss. Stattdessen können zwischen dem Motorritzel und dem ersten Getriebeelement noch weitere Getriebestufen oder Übertragungselemente wie z.B. Riementrieb, Winkeltrieb etc. vorhanden sein.

Es kann auch vorteilhaft sein, das Tripel- oder Doppelzahnrad und somit den Hemmungsmotor und das dritte Getriebeelement, insbesondere die Schnecke, näher am Getriebeausgang zu platzieren. Dadurch kann die Hemmungseinheit die Getriebestufen zwischen Antriebsmotor und dem Tripel- oder Doppelzahnrad vor dauernder nachteiliger Belastung (z. B. bei Kunststoffzahnrädern mit Kriechverhalten) oder Beschädigung schützen.

Damit der Stellantrieb auch nach dem Einsatz der Selbsthemmung bei anliegender Last ohne eine Wartung funktionsfähig ist und das Schneckengetriebe nicht blockiert, ist es vorteilhaft, wenn der Antriebsmotor und der Hemmungsmotor nach dem Einsatz der Selbsthemmung bei anliegender Last beim nachfolgenden Betrieb nicht gleichzeitig angesteuert werden.

Die Blockade des Schneckengetriebes nach Einsatz der Selbsthemmung bei anliegender Last auf dem Schneckengetriebe und bei Verwendung eines Hemmungsmotors mit geringer Leistung zum Antreiben des dritten Getriebeelements, insbesondere der Schnecke, kann ein Problem darstellen. Die Blockade tritt aufgrund eines Verkeilens des zweiten Getriebeelements, insbesondere des Schneckenrades, und des dritten Getriebeelements, insbesondere der Schnecke, auf und wird beispielsweise durch eine hohe auftretende Last am zweiten Getriebeelement, einen Drehrichtungswechsel des Stellantriebs oder durch Vibrationen ausgelöst. Das Verkeilen findet im Eingriff der Schnecke mit dem Schneckenrad statt, genauer gesagt, wenn die Schnecke z. B. beim Stoppen des Aktuators zu nah an einer Seite der Zahnflanke des Schneckenrades zum Halt kommt. Findet nun ein Drehrichtungswechsel des Getriebes statt und werden Antriebsmotor und Hemmungsmotor gleichzeitig bestromt, tritt der Fall auf, dass beim Bewegen der Schnecke und des Schneckenrades in die gleiche Richtung, die Schnecke mit einer Zahnflanke des Schneckenrades kollidiert und dies zum Verkeilen des Schneckengetriebes führt. Der Hemmungsmotor ist vorzugsweise klein ausgelegt. Demnach ist dieser vorzugsweise im Vergleich zum Antriebsmotor leistungsschwächer, so dass der Hemmungsmotor die Schnecke nicht aus der Blockadeposition bewegen kann, da die Zahnflanke des Schneckenrades mit dem deutlich leistungsstärkeren Antrieb des Antriebsmotors auch in Richtung der Schnecke gedrückt wird und hierdurch das Verkeilen aufrechterhalten wird. Dieses Problem kann gelöst werden, wenn der Antriebsmotor und der Hemmungsmotor unterschiedlich ansteuerbar sind. Vorteilhaft ist es, wenn der leistungsschwächere Hemmungsmotor und der leistungsstärkere Antriebsmotor vor dem Normalbetrieb des Stellantriebs so angesteuert werden, dass die Blockade des Schneckengetriebes verhindert oder gelöst wird. Dies kann über zwei Blockadelösebetriebe erfolgen, nämlich den ersten Startbetrieb, bzw. vorauseilenden Blockadelösebetrieb, und den zweiten Startbetrieb, bzw. den sicheren Blockadelösebetrieb. Diese Blockadelösebetriebe können, abhängig vom Anwendungsfall, allein oder in Kombination verwendet werden. Der normale Betrieb, bei dem die beiden Motoren gleichzeitig angesteuert werden, wird als Normalbetrieb bezeichnet.

Wie zuvor beschrieben, kann es beispielsweise nach einer Drehrichtungsänderung des Antriebsgetriebes nach einem Stillstand schnell zu einer Blockade des Hemmungsgetriebes, insbesondere Schneckengetriebes, kommen. Um die Blockade zu vermeiden, wird das Hemmungsgetriebe nach dem Stillstand im ersten Startbetrieb bzw. vorauseilenden Blockadelösebetrieb betrieben. Hierfür wird der kleine Hemmungsmotor zuerst für einen bestimmten Zeitraum bestromt und bewegt sich in die gewünschte Drehrichtung. Danach wird der große Antriebsmotor in die gewünschte Richtung bestromt. Durch diese Betriebsart eilt die Schnecke dem Schneckenrad etwas voraus, d. h. sollte sich die Schnecke nach dem Stillstand zu nahe an der Zahnflanke des Schneckenrades befinden, kann die Schnecke sich noch vor der Kollision mit der Zahnflanke des Schneckenrads wegbewegen.

Wenn der Stellantrieb kostengünstig ausgestaltet werden soll, kann auf zusätzliche Sensorik verzichtet werden. In diesem Fall ist der Steuerungseinheit die genaue Position der Schnecke zwischen den beiden Zahnflanken des Schneckenrades unbekannt. Die Steuerungseinheit ist dann vorzugsweise derart ausgebildet, dass diese nach jedem Stillstand des Stellantriebs den Stellantrieb im ersten Startbetrieb bzw. Blockadelösebetrieb betreibt. Infolgedessen wird der Hemmungsmotor für einen gewissen Zeitraum zuerst in die gewünschte Drehrichtung bestromt, bevor der Antriebsmotor auch in die gewünschte Drehrichtung bestromt wird.

Hier kann auch der Fall auftreten, dass sich die Schnecke beim Stillstand nahe an einer Zahnflanke des Schneckenrades befindet und beim Betrieb im ersten Startbetrieb bzw. Blockadelösebetrieb gegen eine der Zahnflanken des Schneckenrades fährt, bevor das Schneckenrad vom Antriebsmotor über das Antriebsgetriebe in die gewünschte Drehrichtung bewegt wird. Dies führt jedoch nur dann nicht zu einer Blockade des Schneckengetriebes, wenn das Schneckenrad von dem leistungsstärkeren Antriebsmotor angetrieben wird und somit nicht durch das Auffahren der Schnecke verkeilt.

Der erste Startbetrieb bzw. Blockadelösebetrieb reicht für Anwendungsfälle aus, bei denen keine große Last am Schneckenrad anliegt. Beim Verwenden einer Sensorik zum Erkennen der Position der Schnecke, z. B. durch einen Drehwinkelsensor, kann die Steuerungseinheit so ausgelegt sein, dass der Stellantrieb üblicherweise im Normalbetrieb angesteuert wird und nur im ersten Startbetrieb bzw. Blockadelösebetrieb, wenn die Schnecke beim Stillstand des Stellantriebs zu nah an einer Zahnflanke des Schneckenrades zum Halt kommt und die Bewegung in die gewünschte Richtung für eine Kollision sorgen würde.

Wenn keiner der beiden Motoren antreibt und das Hemmungsgetriebe, insbesondere das Schneckengetriebe, das Rückdrehen des Antriebsgetriebes und des Antriebsmotors durch die Selbsthemmung verhindern, kommt es - vor allem beim Anliegen von hoher Last am Schneckengetriebe - häufig zum Blockieren des Schneckengetriebes. In diesem Fall löst sich die Selbsthemmung des Schneckengetriebes nicht. Um dies zu verhindern, ist nachfolgende asynchrone und/oder sequenzielle Steuerung der Motoren vorteilhaft.

Um die Selbsthemmung am Schneckengetriebe sicher zu lösen, muss beim Starten oder bei einer Drehrichtungsumkehr die Schnecke freigefahren bzw. aus dem Verkeilen mit dem Schneckenrad gefahren werden. Dazu wird der Antriebsmotor kurzzeitig in Gegenrichtung bestromt. Ferner wird innerhalb der kurzzeitigen Bestromung des Antriebsmotors der Hemmungsmotor in Gegenrichtung und/oder in die gewünschte Richtung bestromt bzw. gestartet. Durch die Drehung des Antriebsmotors in Gegenrichtung wird ein entsprechendes Drehmoment auf das erste Getriebeelement übertragen. Da das erste Getriebeelement und das zweite Getriebeelement, insbesondere das Schneckenrad, miteinander drehfest bzw. wirkverbunden sind, liegt das Drehmoment auch an dem zweiten Getriebeelement bzw. Schneckenrad an, so dass sich das zweite Getriebeelement leicht in die Gegenrichtung bewegt. Infolgedessen liegt keine Last mehr vom Schneckenrad auf der Schnecke an. Gleichzeitig treibt der Hemmungsmotor in die gewünschte Richtung an, so dass sich die Schnecke wieder bewegen und vorauseilen kann. Im nächsten Schritt muss der Antriebsmotor in die gewünschte Drehrichtung bestromt werden. Die Selbsthemmung ist nun erfolgreich gelöst und es kommt nicht zur Blockade. Der Stellantrieb kann also sicher aus der Selbsthemmung gefahren werden, ohne dass es zur Blockade des Schneckengetriebes kommt, bzw. kann so eine bestehende Blockade des Schneckengetriebes gelöst werden.

Die Steuerungseinheit für den Antriebsmotor und/oder den Hemmungsmotor kann entweder im Gehäuse des Stellantrieb selbst oder in einem anderen Steuergerät des Fahrzeuges untergebracht sein.

Es gibt Stellantriebe, bei denen es häufig zur Blockade aufgrund von hohen anliegenden Lasten oder sehr klein dimensioniertem Hemmungsmotor kommt. In den Fällen kann es sinnvoll sein, dass die Steuerungseinheit den Antriebsmotor und/oder den Hemmungsmotor stets nach dem Abschalten beim nächsten Anschalten immer im ersten oder zweiten Startbetrieb bzw. Blockadelösebetrieb ansteuert. So wird sichergestellt, dass der Stellantrieb stets funktionsfähig ist. Es sind in dem Fall keine zusätzlichen Sensoren notwendig, so dass der Stellantrieb kostengünstiger ausgebildet werden könnte. Der zumindest eine Sensor könnte jedoch bei Bedarf hinzugefügt werden.

Bei Stellantrieben, die als elektronische Parkbremse verwendet werden, wird der Betrieb im zweiten Startbetrieb bzw. zweiten Blockadelösebetrieb bevorzugt, da bei elektronischen Parkbremsen hohe Lasten am Getriebeausgang anliegen. Ferner ist bei diesem Anwendungsfall eine hohe Zuverlässigkeit notwendig, dass sich die Parkbremse löst. Bei Heckspoilern oder Fensterhebern würde der erste Startbetrieb bzw. erste Blockadelösebetrieb ausreichen.

Es gibt Stellantriebe, bei denen nur in seltenen Fällen im Betrieb, z. B. durch Vibrationen, Temperaturschwankungen oder bei langen Standzeiten, eine hohe Last an dem Schneckenrad und der Schnecke anliegt. In diesen Anwendungsfällen könnte der Stellantrieb meist im Normalbetrieb angesteuert werden, wobei der Antriebsmotor und der Hemmungsmotor parallele und/oder synchron bestromt und/oder angesteuert werden. Im Fall einer Blockade müsste aber der Stellantrieb gewartet werden und wäre nicht funktionsfähig. Um die Wartung zu vermeiden, könnte der Stellantrieb in einem oder beiden der vorstehenden Startbetrieben betrieben werden, insbesondere sobald eine Blockade von der Steuerungseinheit erfasst wurde.

Die Steuerungseinheit kann so ausgebildet sein, dass im Normalbetrieb zunächst beide Motoren gleichzeitig angesteuert und betrieben werden. Antriebsmotor und Hemmungsmotor haben vorzugsweise jeweils eine eigene Strom- und Spannungszufuhr.

Vorteilhaft ist es, wenn für den Hemmungsmotor und/oder Antriebsmotor ein Stromgrenzwert des Stellantriebs im Normalbetrieb festgelegt wird. Der Stromgrenzwert liegt unterhalb oder kann identisch mit einem hinterlegten Maximalstromwert sein. Der Maximalstromwert dient als Schutz um eine Beschädigung des Antriebsgetriebes und/oder Hemmungsgetriebes durch Überbelastung zu vermeiden. Überschreitet der Hemmungsmotor und/oder der Antriebsmotor den Stromgrenzwert kurz nach Starten des Stellantriebs im Normalbetrieb, ist die Blockade des Schneckengetriebes sehr wahrscheinlich. Gleiches ist der Fall, wenn der Stellantrieb im Normalbetrieb stoppt und der Stromgrenzwert kurz vor dem Stillstand überschritten wird. Bei einem oder allen der vorstehenden Ereignisse ist es vorteilhaft, wenn die Steuerungseinheit beim nächsten Anschalten den Antriebsmotor und den Hemmungsmotor in einem der beiden Startbetriebe betreibt.

Die Steuerungseinheit kann zusätzlich oder alternativ so ausgelegt sein, dass nach dem Erreichen des Stromgrenzwerts im Normalbetrieb und dem Abschalten der beiden Motoren im ersten Schritt das Anfahren im ersten Startbetrieb durchgeführt wird. Gelingt das Lösen der Blockade durch den ersten Startbetrieb nicht - z. B. weil die Last am Schneckenrad zu groß ist, was z. B. durch ein Überschreiten des Stromgrenzwerts oder durch Überschreiten eines hinterlegten Zeitwerts erkannt werden kann - wird im zweiten Schritt das Anfahren im zweiten Startbetrieb gestartet. Die festgelegten Stromgrenzwerte für den Normalbetrieb, den ersten Startbetrieb und/oder den zweiten Startbetrieb können identisch oder zueinander unterschiedlich sein.

Bleibt beim Normalbetrieb des Stellantriebs der Strom unterhalb des Stromgrenzwertes und werden die beiden Motoren abgeschaltet, werden die beiden Motoren beim nächsten Anschalten im Normalbetrieb, also gleichzeitig, angesteuert.

Anhand von Sensoren, wie z. B. Drehwinkelsensoren oder Endlagesensoren, insbesondere an dem Hemmungsmotor kann die Position der Schnecke ermittelt werden. Es gibt einen Startbetriebsbereich bzw. Positionsbereich für das dritte Getriebeelement, insbesondere die Schnecke, der vorgegeben ist oder von der Steuerungseinheit ermittelt wird. Der Startbetriebsbereich wird so gewählt, dass in diesem Bereich die Blockade des dritten Getriebeelements, insbesondere der Schnecke, sehr wahrscheinlich ist. Dies kann beispielsweise über eine Vielzahl von Versuchen empirisch ermittelt werden. Ermittelt die Steuerungseinheit, insbesondere anhand zumindest eines Sensors, dass sich das dritte Getriebeelement, insbesondere die Schnecke, innerhalb des Startbetriebsbereichs bzw. festgelegten Positionsbereichs befindet, wählt die Steuerungseinheit beim nächsten Anschalten und/oder bei einer Drehrichtungsumkehr den zumindest einen Startbetrieb aus. Wenn sich das dritte Getriebeelement bei diesen Ereignissen außerhalb des Startbetriebsbereichs befindet, wird der Stellantrieb im Normalbetrieb betrieben.

Weitere Vorteile der Erfindung sind in den nachfolgenden Ausführungsbeispielen beschrieben. Es zeigt:
- **Figur 1**: eine schematische Schnittansicht eines Stellantriebs gemäß einem ersten Ausführungsbeispiel,
- **Figur 2**: eine schematische Schnittansicht eines Stellantriebs gemäß einem zweiten Ausführungsbeispiel,
- **Figur 3a - 3c**: eine schematische Schnittansicht eines zweiten und dritten Getriebeelements eines Hemmungsgetriebes eines Stellantriebs zu unterschiedlichen Zeitpunkten während eines ersten Startbetriebs,
- **Figur 4a - 4c**: eine schematische Schnittansicht des zweiten und dritten Getriebeelements des Hemmungsgetriebes des Stellantriebs zu unterschiedlichen Zeitpunkten während eines zweiten Startbetriebs für eine erste Drehrichtung und
- **Figur 5a - 5c**: eine schematische Schnittansicht des zweiten und dritten Getriebeelements des Hemmungsgetriebes des Stellantriebs zu unterschiedlichen Zeitpunkten während des zweiten Startbetriebs für eine zur ersten Drehrichtung entgegengesetzte zweite Drehrichtung.

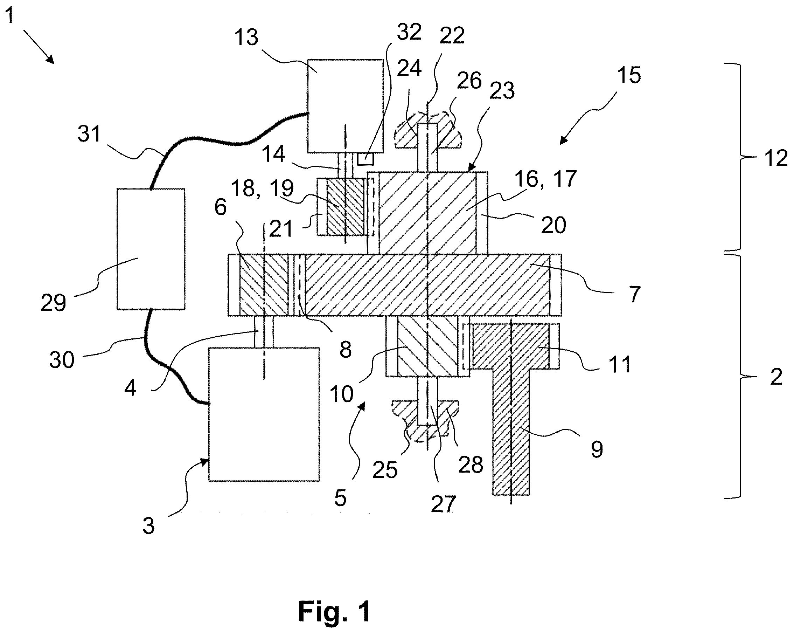

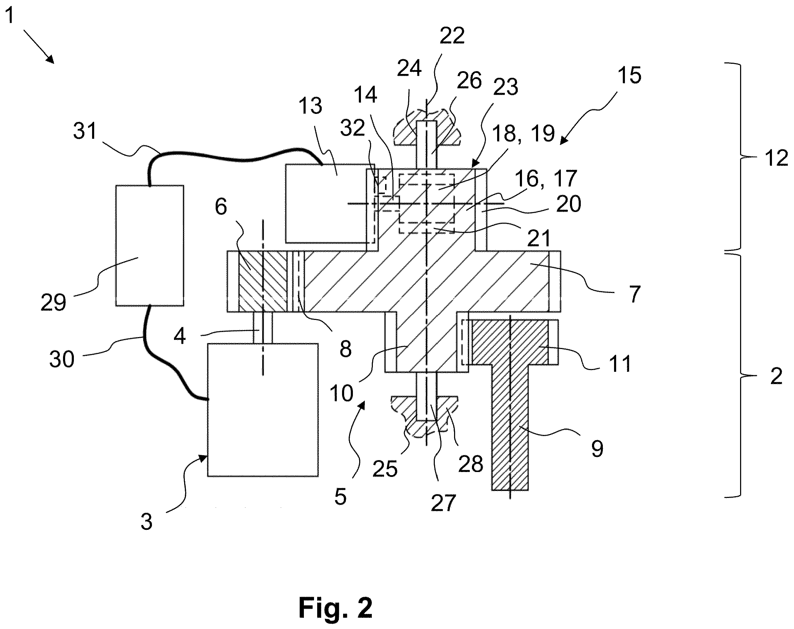

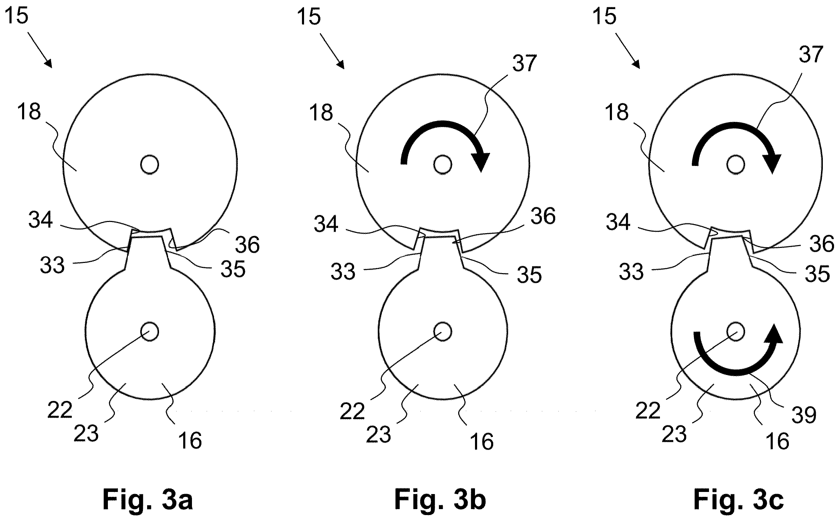

Figur 1 und 2 zeigen zwei Ausführungsbeispiele eines Stellantriebs 1 in einer schematischen Schnittansicht. Von ihrer Funktionsweise, die in den Figuren 3a bis 5c erläutert werden wird, sind diese Stellantriebe 1 zueinander identisch. Sie unterscheiden sich lediglich durch einige bauliche Änderungen, die in der nachfolgenden Beschreibung detailliert erläutert werden. Für Merkmale des in Figur 1 dargestellten Ausführungsbeispiels und Merkmale des in Figur 2 dargestellten Ausführungsbeispiels, die in ihrer Ausgestaltung und/oder Wirkweise gleich sind, werden dieselben Bezugszeichen verwendet. Sofern nachfolgend nichts Abweichendes erläutert wird, entspricht deren Ausgestaltung und/oder Wirkweise der Ausgestaltung und/oder Wirkweise der vorstehend bereits beschriebenen Merkmale.

Der Stellantrieb 1 gemäß Figur 1 und Figur 2 ist für eine elektrische Baueinheit eines Kraftfahrzeuges vorgesehen. Die vorliegend nicht dargestellte elektrische Baueinheit, für die der Stellantrieb 1 einsetzbar ist, kann insbesondere eine Parkbremse, ein Heckspoiler, ein Lenkrad, ein Sitz, ein Schiebedach, ein Fenster, eine Tür und/oder ein Kofferraumdeckel sein. Vorzugsweise ist der Stellantrieb 1 ein Parkbremsenstellantrieb, ein Heckspoilerstellantrieb, ein Lenkradstellantrieb, ein Sitzstellantrieb, ein Schiebedachstellantrieb, ein Fensterstellantrieb, ein Türstellantrieb und/oder ein Kofferraumdeckelstellantrieb.

Gemäß Figur 1 umfasst der Stellantrieb 1 einen Antriebsstrang 2, über den zum Stellen der gewünschten Baueinheit eine Antriebskraft übertragen werden kann. Der Antriebsstrang 2 weist einen Antriebsmotor 3 auf. Hierbei handelt es sich vorzugsweise um einen Elektromotor, der bestromt werden kann. Der Antriebsmotor 3 weist eine erste Motorwelle 4 auf.

Außerdem weist der Antriebsstrang 2 ein Antriebsgetriebe 5 auf. Dieses ist nicht selbsthemmend ausgebildet. Infolgedessen kann dieses bei einer am Getriebeausgang des Antriebsgetriebes 5 anliegenden Kraft bewegt, insbesondere zurückgedreht, werden, wenn der Antriebsmotor 3 ausgeschaltet und/oder nicht bestromt ist.

Das Antriebsgetriebe 5 umfasst ein Motorritzel 6, das drehfest mit der ersten Motorwelle 4 verbunden ist. Außerdem weist das Antriebsgetriebe 5 ein drehbar gelagertes erstes Getriebeelement 7 auf. Hierbei handelt es sich vorzugsweise um ein Zahnrad, insbesondere ein Stirnrad. Gemäß dem in Figur 1 dargestellten Ausführungsbeispiel kämmt das erste Getriebeelement 7 in das Motorritzel 6 ein. Infolgedessen steht das erste Getriebeelement 7 unmittelbar mit dem Motorritzel 6 in mechanischer Wirkverbindung. Das erste Getriebeelement 7 weist eine erste Verzahnung 8 auf. Wenn das Motorritzel 6, wie in dem in Figur 1 dargestellten Ausführungsbeispiel, unmittelbar mit dem ersten Getriebeelement 7 in mechanischer Wirkverbindung steht, dann weist das Motorritzel 6 eine zur ersten Verzahnung 8 des ersten Getriebeelements 7 korrespondierende Verzahnung auf. Alternativ ist es aber ebenso möglich, dass in einem vorliegend nicht dargestellten Ausführungsbeispiel zumindest ein sechstes Getriebeelement zwischen dem Motorritzel 6 und dem ersten Getriebeelement 7 angeordnet sind. Bei dem sechsten Getriebeelement kann es sich um ein Zahnrad, einen Riemen und/oder ein Winkelgetriebe handeln. Infolgedessen würde bei diesem alternativen Ausführungsbeispiel das Motorritzel 6 mittelbar über das zumindest eine sechste Getriebeelement mit dem ersten Getriebeelement 7 in mechanischer Wirkverbindung stehen.

Der Antriebsstrang 2 weist gemäß Figur 1 eine Abtriebswelle 9 auf. Die Abtriebswelle 9 kann den Getriebeausgang des Stellantriebs 1 ausbilden. Ebenso ist es aber auch möglich, dass sich an die Abtriebswelle 9 zumindest ein weiteres Getriebeelement und/oder eine weitere Getriebestufe anschließt, die beispielsweise die Rotationsbewegung der Abtriebswelle 9 in eine translatorische Bewegung umwandelt. Zusätzlich oder alternativ kann sich hier auch zumindest eine Planetenstufe anschließen.

Wie aus Figur 1 hervorgeht, umfasst der Antriebsstrang 2 gemäß dem dargestellten Ausführungsbeispiel ein viertes Getriebeelement 10. Dieses ist in Abtriebsrichtung des Antriebsstrangs 2 dem ersten Getriebeelement 7 nachgeschaltet. Auch bei diesem vierten Getriebeelement 10 kann es sich vorzugsweise um ein Zahnrad, insbesondere ein Stirnrad handeln. Dem vierten Getriebeelement 10 ist gemäß Figur 1 zumindest ein fünftes Getriebeelement 11 nachgeschaltet. Das vierte Getriebeelement 10 und das fünfte Getriebeelement 11 stehen unmittelbar in mechanischer Wirkverbindung und/oder kämen ineinander. Das fünfte Getriebeelement 11 ist drehfest mit der Abtriebswelle 9 verbunden. Hierbei kann das fünfte Getriebeelement 11 und die Abtriebswelle 9 einteilig ausgebildet sein.

In einem vorliegend nicht dargestellten alternativen Ausführungsbeispiel kann der Stellantrieb 1 auch derart ausgebildet sein, dass das vierte Getriebeelement 10 die Abtriebswelle 9 bildet und/oder als diese ausgebildet ist. In diesem Fall muss das vierte Getriebeelement 10 keine Verzahnung aufweisen.

Gemäß dem vorliegenden Ausführungsbeispiel wird demnach eine von dem Antriebsmotor 3 erzeugte Antriebskraft über das Motorritzel 6 auf das erste Getriebeelement 7 übertragen. Das vierte Getriebeelement 10 ist mit dem ersten Getriebeelement 7 drehfest verbunden. Hierbei können das vierte Getriebeelement 10 und das erste Getriebeelement 7 separate Teile sein, die drehfest miteinander verbunden sind. Alternativ können diese aber auch durch eine einteilige Ausbildung miteinander verbunden sein. Infolgedessen dreht sich das vierte Getriebeelement 10 gemeinsam mit dem ersten Getriebeelement 7. Das vierte Getriebeelement 10 kämmt in das fünfte Getriebeelement 11 ein und überträgt hierdurch die Antriebskraft auf die Abtriebswelle 9. Diese ist abbildungsgemäß vorzugsweise drehfest mit dem fünften Getriebeelement 11 verbunden ist.

Wenn nun an der Abtriebswelle 9 eine rückdrehende Kraft anliegt (z. B. im Falle einer aktivierten Parkbremse), wird sich das Antriebsgetriebe 5 und der Antriebsmotor 3 zurückdrehen, sobald vom Antriebsmotor 3 keine entgegengerichtete Kraft aufgebracht wird. Dies liegt an dem nicht selbsthemmend ausgebildeten Antriebsgetriebe 5. Ein Vorteil des nicht selbsthemmenden Antriebsgetriebes 5 besteht zwar in einem hohen Wirkungsgrad, jedoch ist für viele Anwendungen eine Selbsthemmung des Stellantriebs 1 unabdingbar.

Aufgrund dessen umfasst der Stellantrieb 1 gemäß dem in Figur 1 dargestellten Ausführungsbeispiel eine Hemmungseinheit 12. Diese weist einen Hemmungsmotor 13 auf. Der Hemmungsmotor 13 ist vorzugsweise ein Elektromotor und/oder umfasst eine zweite Motorwelle 14. Des Weiteren weist die Hemmungseinheit 12 ein Hemmungsgetriebe 15 auf. Das Hemmungsgetriebe 15 ist dem Hemmungsmotor 13 nachgeschalten. Es weist zumindest ein drehbar gelagertes zweites Getriebeelement 16 auf. Ferner weist das Hemmungsgetriebe 15 ein drehbar gelagertes drittes Getriebeelement 18 auf. Das zweite Getriebeelement 16 und das dritte Getriebeelement 18 stehen gemäß Figur 1 zueinander, insbesondere unmittelbar (d. h. ohne die Zwischenschaltung eines weiteren Getriebeelementes) in mechanischer Wirkverbindung. Demnach greifen diese vorzugsweise unmittelbar ineinander und/oder sind miteinander verzahnt.

Das zweite Getriebeelement 16 weist eine zweite Verzahnung 20 auf. Im Vergleich zur ersten Verzahnung 8 des ersten Getriebeelements 7 ist die zweite Verzahnung 20 des zweiten Getriebeelements 16 unterschiedlich ausgebildet. Demnach ist die erste Verzahnung 8 des ersten Getriebeelements 7 vorzugsweise derart ausgebildet, dass diese im Zusammenwirken mit einem weiteren Getriebeelement, vorliegend insbesondere mit dem Motorritzel 6, keine Selbsthemmung ausbildet. So kann die erste Verzahnung 8 des ersten Getriebeelements 7 beispielsweise eine Schrägverzahnung sein. Im Gegensatz dazu ist die zweite Verzahnung 20 des zweiten Getriebeelements 16 derart ausgebildet, dass diese im Zusammenwirken mit einem weiteren Getriebeelement, vorliegend insbesondere mit dem dritten Getriebeelement 18, eine Selbsthemmung ausbildet. Hierfür ist die zweite Verzahnung 20 beispielsweise eine Schneckenradverzahnung. Das dritte Getriebeelement 18, insbesondere die Schnecke 19, weist eine dritte Verzahnung 21 auf. Diese dritte Verzahnung 21 korrespondiert mit der zweiten Verzahnung 20 des zweiten Getriebeelements 16 derart, dass diese im Zusammenwirken eine Selbsthemmung des Hemmungsgetriebes 15 ausbilden.

Um das Hemmungsgetriebe 15 mit einer entsprechend selbsthemmenden Wirkung zu versehen, ist es vorteilhaft, wenn das Hemmungsgetriebe 15 insbesondere ein Schneckengetriebe umfasst oder als Schneckengetriebe ausgebildet ist. Hierbei weist das Schneckengetriebe eine, vorzugsweise antriebsseitige, Schnecke 19 und ein, insbesondere abtriebsseitiges, Schneckenrad 17 auf. In dem in Figur 1 dargestellten Ausführungsbeispiel ist das zweite Getriebeelement 16 als Schneckenrad 17 ausgebildet. Des Weiteren ist das dritte Getriebeelement 18 als Schnecke 19 ausgebildet. Alternativ könnte dies aber auch entgegengesetzt ausgebildet sein. Infolgedessen weisen das zweite Getriebeelement 16 und das dritte Getriebeelement 18 zueinander korrespondierende Verzahnungen - nämlich die zweite Verzahnung 20 und die dritte Verzahnung 21 - auf, die im Zusammenwirken eine Selbsthemmung des Hemmungsgetriebes 15 bewirken. Das Schneckenrad 17 greift hierbei, insbesondere mit seiner zweiten Verzahnung 20, unmittelbar in die Schnecke 19, insbesondere in die dritte Verzahnung 21, ein.

Gemäß Figur 1 ist das dritte Getriebeelement 18, insbesondere die Schnecke 19, drehfest auf der zweiten Motorwelle 14 des Hemmungsmotors 13 angeordnet.

Damit die Hemmungseinheit 12 den Antriebsstrang 2 hemmen kann, steht das Hemmungsgetriebe 15 mit dem Antriebsgetriebe 5, insbesondere über eine (vorzugsweise drehfeste) Schnittstelle, in mechanischer Wirkverbindung. Diese Schnittstelle ist zwischen dem ersten Getriebeelement 7 des Antriebsgetriebes 5 und dem zweiten Getriebeelement 16 des Hemmungsgetriebes 15 ausgebildet. Hierfür befinden sich das erste Getriebeelement 7 und das zweite Getriebeelement 16 auf einer gemeinsamen Drehachse 22. Sowohl das erste Getriebeelement 7 als auch das zweite Getriebeelement 16 sind um diese gemeinsame Drehachse 22, insbesondere gemeinsam, drehbar gelagert. Damit, insbesondere bei abgeschaltetem Antriebsmotor 3, die selbsthemmende Wirkung bzw. die hemmende Kraft des Hemmungsgetriebes 15 auf das Antriebsgetriebe 5 übertragen werden kann, ist das zweite Getriebeelement 16 drehfest mit dem ersten Getriebeelement 7 verbunden und/oder gekoppelt. Das erste Getriebeelement 7 des Antriebsgetriebes 5 und das zweite Getriebeelement 16 des Hemmungsgetriebes 15 bilden demnach eine drehfeste Einheit 23 aus, die um die gemeinsame Drehachse 22 drehbar gelagert ist.

Gemäß dem in Figur 1 dargestellten ersten Ausführungsbeispiel sind das erste Getriebeelement 7 und das zweite Getriebeelement 16 separate Teile, insbesondere Zahnräder, die, insbesondere lösbar und/oder unlösbar, miteinander verbunden sind, so dass sie sich als drehfeste Einheit 23 gemeinsam drehen. Das erste Getriebeelement 7 und das zweite Getriebeelement 16 können hierfür form-, kraft- und/oder stoffschlüssig miteinander verbunden sein. Die Bestandteile der drehfesten Einheit 23 können zueinander in Umfangsrichtung der gemeinsamen Drehachse 22 spielfrei oder spielbehaftet miteinander verbunden sein. Demnach kann beispielsweise zwischen dem ersten Getriebeelement 7 und dem mit diesem drehfest verbundenen zweiten Getriebeelement 16 ein Spiel ausgebildet sein, so dass sich diese gegeneinander bzw. relativ zueinander in Umfangsrichtung der gemeinsamen Drehachse 22 im Rahmen des Spiels verdrehen können. Eine relative Verdrehbarkeit im Rahmen eines Spiels wird demnach auch als drehfeste Verbindung verstanden. Hierdurch kann vermieden werden, dass das erste Getriebeelement 7 und/oder das zweite Getriebeelement 16 bei einer asynchronen und/oder zeitversetzten Ansteuerung des Antriebsmotors 3 und des Hemmungsmotors 13 beschädigt werden, wenn korrespondierende Zahnflanken des ersten Getriebeelements 7 und des zweiten Getriebeelements 16 aufeinander fahren. Des Weiteren kann mit einem entsprechend ausgebildeten Spiel eine Blockade zwischen dem zweiten Getriebeelement 16 und dem dritten Getriebeelement 18 mit geringerer Kraft gelöst werden.

Wenn nunmehr im bestimmungsgemäßen Gebrauch bei deaktiviertem Antriebsmotor 3 an der Abtriebswelle 9 eine Rückdrehkraft anliegt, die ein Zurückdrehen des Antriebsgetriebes 5 und der ersten Motorwelle 4 bewirken möchte, wirkt diese Rückdrehkraft aufgrund der drehfesten Verbindung zwischen dem ersten Getriebeelement 7 und dem zweiten Getriebeelement 16 auch auf das Hemmungsgetriebe 15 ein. Da nunmehr das Hemmungsgetriebe 15 aufgrund der Verzahnung zwischen dem zweiten Getriebeelement 16 und dem dritten Getriebeelement 18 selbsthemmend ausgebildet ist, wirkt der Rückdrehkraft eine Hemmungskraft entgegen, die über die Schnittstelle bzw. drehfeste Verbindung zwischen dem ersten Getriebeelement 7 und dem zweiten Getriebeelement 16 auf das erste Getriebeelement 7 übertragen wird. Hierdurch wird ein Zurückdrehen des Antriebsgetriebes 5 verhindert.

Gemäß Figur 1 ist das vierte Getriebeelement 10 genauso wie das erste Getriebeelement 7 und das zweite Getriebeelement 16 drehbar auf der gemeinsamen Drehachse 22 angeordnet. Infolgedessen ist das erste Getriebeelement 7, das zweite Getriebeelement 16 und/oder das vierte Getriebeelement 10, insbesondere zur gemeinsamen Drehachse 22, konzentrisch angeordnet. Das erste Getriebeelement 7 ist hierbei in Axialrichtung der gemeinsamen Drehachse 22 zwischen dem zweiten Getriebeelements 16 und dem vierten Getriebeelement 10 angeordnet. Das vierte Getriebeelement 10 ist gemäß dem in Figur 1 dargestellten Ausführungsbeispiel ein separates Teil und, insbesondere lösbar oder unlösbar, mit dem ersten Getriebeelement 7 drehfest verbunden. Die Verbindung zwischen dem ersten Getriebeelement 7 und dem vierten Getriebeelement 10 kann form-, kraft- und/oder stoffschlüssig ausgebildet sein. Ferner kann zwischen dem ersten Getriebeelement 7 und dem vierten Getriebeelement 10 in Umfangsrichtung der gemeinsamen Drehachse 22 ein Spiel ausgebildet sein, so dass sich diese in Umfangsrichtung im Rahmen dieses Spiels verdrehen können. Gemäß dem in Figur 1 dargestellten Ausführungsbeispiel ist das vierte Getriebeelement 10 somit Bestandteil der drehfesten Einheit 23. In einem vorliegend nicht dargestellten Ausführungsbeispiel ist es aber auch ebenso denkbar, dass das erste Getriebeelement 7 und das vierte Getriebeelement 10 einteilig ausgebildet sind. Alternativ kann aber auch das erste Getriebeelement 7 und das zweite Getriebeelement 16 einteilig ausgebildet sein.

Eine drehfeste Verbindung zwischen dem ersten Getriebeelement 7 und dem zweiten Getriebeelement 16 und/oder eine drehfeste Verbindung zwischen dem ersten Getriebeelement 7 und dem vierten Getriebeelement 10 kann insbesondere über eine, vorzugsweise spielbehaftete oder spielfreie, Passfederverbindung ausgebildet sein. Diese kann unmittelbar zwischen den vorstehend genannten Bauteilen oder aber auch mittelbar über ein weiteres Bauteil, wie beispielsweise eine Welle, ausgebildet sein.

Wie aus Figur 1 hervorgeht, ist die drehfeste Einheit 23 in einem ersten Lagerbereich 24 und/oder einem zweiten Lagerbereich 25 aufgenommen und/oder in diesem drehbar gelagert, so dass sie sich um die gemeinsame Drehachse 22 drehen kann. Der Stellantrieb 1 umfasst ein Gehäuse 28. Der erste Lagerbereich 24 und/oder der zweite Lagerbereich 25 sind in dem Gehäuse 28 ausgebildet. Zusätzlich oder alternativ kann der Stellantrieb 1 ein vorliegend nicht dargestelltes Trägerelement, insbesondere eine Trägerplatte, aufweisen, die in dem Gehäuse 28 angeordnet ist. Zumindest einer der Lagerbereiche 24, 25 kann auch an oder in dem Trägerelement ausgebildet sein. Ferner können einzelne Komponenten des Antriebsstrangs 2 und/oder der Hemmungseinheit 12 an dem Trägerelement angeordnet und/oder in diesem gelagert sein.

Gemäß dem in Figur 1 dargestellten Ausführungsbeispiel ist die drehfeste Einheit 23 über zumindest ein Lagerelement 26, 27 in zumindest einem der Lagerbereiche 24, 25, insbesondere drehbar, gelagert. Das zumindest eine Lagerelement 26, 27 kann ebenfalls drehfest mit der drehfesten Einheit 23 verbunden sein. Auch kann das zumindest eine Lagerelement 26, 27 einteilig mit der drehfesten Einheit 23 ausgebildet sein. Vorliegend sind die Lagerelemente 26, 27 als Lagerstift ausgebildet, die in entsprechend korrespondierenden ausgebildeten Lagerbereich 24, 25 des Gehäuses 28 drehbar aufgenommen sind.

Der Hemmungsmotor 13 ist im Vergleich zum Antriebsmotor 3 kleiner ausgebildet. Zusätzlich oder alternativ kann der Hemmungsmotor 13 eine kleinere elektrische Leistung aufweisen. Hierdurch kann der Stellantrieb 1 sehr kompakt und bauraumsparend ausgebildet werden. Im bestimmungsgemäßen Gebrauch kann es im Hemmungsgetriebe 15 zu einer Blockade kommen. Hierbei verkeilen sich Zahnflanken 33, 35 des zweiten Getriebeelements 16, insbesondere des Schneckenrades 17, mit korrespondierenden Zahnflanken 34, 36 des dritten Getriebeelements 18, insbesondere der Schnecke 19. Der Hemmungsmotor 13 kann derart klein und/oder mit einer derart kleinen elektrischen Leistung ausgebildet sein, dass diese im bestimmungsgemäßen Gebrauch die Blockade des Hemmungsgetriebes 15 nicht alleine, sondern nur mit Unterstützung des Antriebsmotors 3, lösen kann.

Wie aus dem in Figur 1 dargestellten Ausführungsbeispiel hervorgeht, ist die erste Motorwelle 4 des Antriebsmotors 3 parallel zu der gemeinsamen Drehachse 22 ausgerichtet. Des Weiteren ist die zweite Motorwelle 14 des Hemmungsmotors 13 parallel zu der gemeinsamen Drehachse 22 ausgerichtet.

Um den Antriebsmotor 3 und den Hemmungsmotor 13 steuern zu können, umfasst der Stellantrieb 1 eine Steuerungseinheit 29. Der Antriebsmotor 3, das Antriebsgetriebe 5, der Hemmungsmotor 13, das Hemmungsgetriebe 15 und/oder die Steuerungseinheit 29 können ganz oder teilweise in dem Gehäuse 28 angeordnet und/oder in dieses integriert sein. Alternativ kann die Steuerungseinheit 29 auch ein zum Gehäuse 28 separates Bauteil und/oder von diesem örtlich getrennt ausgebildet sein. Die Steuerungseinheit 29 ist über eine erste elektrische Leitung 30 mit dem Antriebsmotor 3 elektrisch verbunden. Des Weiteren ist der Hemmungsmotor 13 über eine zweite elektrische Leitung 31 elektrisch mit der Steuerungseinheit 29 verbunden. Die erste elektrische Leitung 30 und zweite elektrische Leitung 31 sind voneinander separiert. Der Antriebsmotor 3 und der Hemmungsmotor 13 können getrennt und/oder unabhängig voneinander, insbesondere asynchron und/oder zeitversetzt, von der Steuerungseinheit 29 angesteuert werden.

Gemäß Figur 1 umfasst die Hemmungseinheit 12 zumindest einen Sensor 32. Der Sensor 32 ist im Bereich am und/oder im Hemmungsmotor 13 angeordnet. Bei dem Sensor 32 handelt es sich vorzugsweise um einen Drehwinkelsensor und/oder einen Endlagesensor. Der Sensor 32 und/oder die Steuerungseinheit 29 sind derart ausgebildet, dass mit dem Sensor 32 mittelbar oder unmittelbar eine Relativposition zwischen der zweiten Verzahnung 20 des zweiten Getriebeelements 16 und der dritten Verzahnung 21 des dritten Getriebeelements 18 ermittelbar ist. Zusätzlich oder alternativ ist der Sensor 32 und/oder die Steuerungseinheit 29 derart ausgebildet, dass eine Blockade des Hemmungsgetriebes 15 erfassbar ist. Die Blockade kann im bestimmungsgemäßen Gebrauch insbesondere zwischen dem zweiten Getriebeelement 16 und dem dritten Getriebeelement 18 auftreten, insbesondere wenn eine Zahnflanke der zweiten Verzahnung 20 mit einer Zahnflanke der dritten Verzahnung 21 verkeilt ist.

Gemäß einem Ausführungsbeispiel kann von der Steuerungseinheit 29 und/oder dem zumindest einen Sensor 32 eine Stellung und/oder Position des zweiten Getriebeelements 16 und/oder des dritten Getriebeelements 18 innerhalb eines, insbesondere maximalen, Stellungsbereichs (innerhalb dem das Getriebeelement 16, 18 verstellt werden kann) ermittelt werden. Demnach kann das zweite Getriebeelement 16 und/oder das dritte Getriebeelement 18 zwischen zwei Endanschlägen, die jeweils einen Endpunkt des Stellungsbereichs bilden, verstellt werden. Über den Sensor 32 kann eine Stellung innerhalb dieses Stellungsbereichs ermittelt werden. Des Weiteren kann für das zweite Getriebeelement 16 und/oder für das dritte Getriebeelement 18 zumindest ein Startbetriebsbereich hinterlegt sein. Der zumindest eine Startbetriebsbereich bildet einen Teilbereich des Stellungsbereichs. Der Startbetriebsbereich ist hierbei derart gewählt, dass die Wahrscheinlichkeit einer Blockade stark erhöht ist, wenn das zweite Getriebeelement 16 und/oder das dritte Getriebeelement 18 innerhalb dieses Startbetriebsbereichs gestoppt werden und/oder bei dieser Stellung eine Drehrichtungsumkehr des Stellantriebs 1 erfolgt. Wenn das vorliegend beschriebene Ereignis eintritt, kann die Steuerungseinheit 29 derart ausgebildet sein, dass sie den Antriebsmotor 3 und/oder den Hemmungsmotor 13 derart ansteuert, dass eine Blockade vermieden wird und/oder eine bereits eingetretene Blockade gelöst wird. Welche Betriebe und/oder Steuerungsprogramme hierfür geeignet sind, wird in der nachfolgenden Beschreibung noch detailliert erläutert werden.

Der Stellantrieb 1 kann aber auch derart ausgebildet sein, dass dieser eine Blockade ohne die Verwendung des zumindest einen Sensors 32 erkennen kann. Um eine Blockade des Hemmungsgetriebes 15 und/oder eine Stellung des Hemmungsgetriebes 15, bei der eine Blockade mit sehr hoher Wahrscheinlichkeit vorliegt oder eintreten wird, auch ohne den Sensor 32 feststellen zu können, kann in der Steuerungseinheit 29 ein Stromgrenzwert des Antriebsmotors 3 und/oder des Hemmungsmotors 13 hinterlegt sein. Die Steuerungseinheit 29 erkennt, dass eine Blockade mit hoher Wahrscheinlichkeit vorliegt, wenn der Stromgrenzwert unmittelbar nach dem Start, unmittelbar nach einer Drehrichtungsumkehr und/oder unmittelbar vor dem letzten Stillstand, überschritten wurde.

Wie bereits vorstehend erwähnt, zeigt Figur 2 eine schematische Darstellung eines zweiten Ausführungsbeispiels des Stellantriebs 1. Bei der nachfolgenden Beschreibung des in Figur 2 dargestellten alternativen Ausführungsbeispiels werden für Merkmale, die im Vergleich zu dem in Figur 1 dargestellten ersten Ausführungsbeispiel in ihrer Ausgestaltung und/oder Wirkweise gleich sind, dieselben Bezugszeichen verwendet. Sofern nichts Abweichendes erläutert wird, entspricht deren Ausgestaltung und/oder Wirkweise der Ausgestaltung und/oder Wirkweise der vorstehend bereits beschriebenen Merkmale.

Das in Figur 2 dargestellte zweite Ausführungsbeispiel unterscheidet sich von dem in Figur 1 dargestellten ersten Ausführungsbeispiel im Wesentlichen durch die Anordnung des Hemmungsmotors 13 und/oder des dritten Getriebeelements 18, insbesondere der Schnecke 19, relativ zur drehfesten Einheit 23. Demnach ist die zweite Motorwelle 14 und/oder eine Drehachse des dritten Getriebeelements 18 schräg, insbesondere lotrecht, zu der gemeinsamen Drehachse 22 der drehfesten Einheit 23 ausgerichtet. Ferner befindet sich abbildungsgemäß das dritte Getriebeelement 18 unterhalb des zweiten Getriebeelements 16.

Ein weiterer Unterschied besteht in der Ausgestaltung der drehfesten Einheit 23. Demnach ist diese in dem in Figur 2 dargestellten Ausführungsbeispiel einteilig, insbesondere materialeinteilig, ausgebildet. Infolgedessen ist zwischen dem ersten Getriebeelement 7 und dem zweiten Getriebeelement 16 kein Spiel ausgebildet. Gleiches trifft auf die materialeinteilige Verbindung zwischen dem ersten Getriebeelement 7 und dem vierten Getriebeelement 10 zu. Auch bei dem in Figur 1 dargestellten Ausführungsbeispiel des Stellantriebs 1 kann die drehfeste Einheit 23 einteilig, insbesondere materialeinteilig, ausgebildet sein. Demnach kann die drehfeste Einheit 23 sowohl beim in Figur 1 dargestellten als auch beim in Figur 2 dargestellten Ausführungsbeispiel als einteiliges Doppelzahnrad und/oder Trippelzahnrad ausgebildet sein. Des Weiteren kann das dritte Getriebeelement 18 und der Hemmungsmotor 13 auch bei dem in Figur 1 dargestellten Ausführungsbeispiel wie in dem in Figur 2 dargestellten Ausführungsbeispiel angeordnet sein.

Nachfolgend wird auf die Arbeitsweise der Steuerungseinheit 29 eingegangen, um einen Stellantrieb 1, insbesondere gemäß Figur 1 und/oder Figur 2, zu betreiben. Hierbei kann der Stellantrieb 1 gemäß der vorangegangenen Beschreibung ausgebildet sein, wobei die genannten Merkmale einzeln oder in beliebiger Kombination vorhanden sein können.

Um das zumindest eine nachfolgende Arbeitsverfahren durchführen zu können, umfasst der Stellantrieb 1 den Antriebsstrang 2. Der Antriebsstrang 2 umfasst das Antriebsgetriebe 5. Das Antriebsgetriebe 5 ist nicht selbsthemmend ausgebildet. Ferner weist das Antriebsgetriebe 5 den Antriebsmotor 3 zum Antreiben des Antriebsgetriebes 5 auf. Des Weiteren umfasst der Stellantrieb 1 die Hemmungseinheit 12 zum Hemmen des Antriebsstrangs 2. Diese Hemmungseinheit 12 umfasst das selbsthemmende Hemmungsgetriebe 15, das mit dem Antriebsgetriebe 5 in mechanischer Wirkverbindung steht. Über diese mechanische Wirkverbindung kann das Hemmungsgetriebe 15 das Antriebsgetriebe 5 und den Antriebsmotor 3 hemmen, wenn der Antriebsmotor 3 nicht bestromt ist. Außerdem weist die Hemmungseinheit 12 den Hemmungsmotor 13 zum Antreiben des Hemmungsgetriebes 15 auf. Auch weist der Stellantrieb 1 die Steuerungseinheit 29 zum Steuern des Antriebsmotors 3 und des Hemmungsmotors 13 auf. Die Steuerungseinheit 29 ist derart ausgebildet, dass der Antriebsmotor 3 und der Hemmungsmotor 13, insbesondere in einem Startbetrieb, asynchron und/oder zeitversetzt betreibbar sind. Der Antriebsmotor 3 und der Hemmungsmotor 13 können von der Steuerungseinheit 29 derart angesteuert werden, dass eine Blockade in dem Hemmungsgetriebe 15 vermieden und/oder gelöst werden kann. Ein Vorteil ist, dass der Hemmungsmotor 13 somit sehr klein und leistungsarm ausgelegt werden kann, was wiederum das Bauvolumen des Stellantriebs 1 reduziert und die Herstellungskosten verringert.

Die Steuerungseinheit 29 ist derart ausgebildet, dass der Antriebsmotor 3 und der Hemmungsmotor 13 von dieser in einem Normalbetrieb zum Stellen der Baueinheit betreibbar sind. Im Normalbetrieb steuert die Steuerungseinheit 29 den Antriebsmotor 3 und den Hemmungsmotor 13 synchron an. Hierdurch wird das dritte Getriebeelement 18 und die drehfeste Einheit 23 synchron zueinander bewegt. Eine erste Zahnflanke 34 des dritten Getriebeelements 18 eilt somit einer ersten Zahnflanke 33 des zweiten Getriebeelements 16 voraus. Des Weiteren eilt in diesem Fall eine zweite Zahnflanke 36 des dritten Getriebeelements 18 einer korrespondierenden zweiten Zahnflanke 35 des zweiten Getriebeelements 16 nach. Die korrespondierenden Zahnflanken 33, 34, 35, 36 weisen somit im Normalbetrieb einen Abstand voneinander auf. Vorteilhafterweise werden somit zwischen der drehfesten Einheit 23 und dem dritten Getriebeelement 18 Reibungsverluste vermieden, wodurch der Wirkungsgrad des Stellantriebs 1 verbessert wird.

Des Weiteren ist die Steuerungseinheit 29 derart ausgebildet, dass der Antriebsmotor 3 und der Hemmungsmotor 13, insbesondere beim erneuten Starten des Stellantriebs 1 nach einem Stillstand und/oder bei einer Drehrichtungsumkehr des Stellantriebs 1, in zumindest einem Startbetrieb zum Vermeiden und/oder Lösen einer Blockade des Hemmungsgetriebes 15 betreibbar sind. In diesem zumindest einen Startbetrieb werden der Antriebsmotor 3 und der Hemmungsmotor 13 zueinander synchron, asynchron, zeitgleich und/oder zeitversetzt von der Steuerungseinheit 29 angesteuert.

In den Figuren 3a, 3b, 3c ist eine schematische Schnittansicht des zweiten Getriebeelements 16 der drehfesten Einheit 23 und des dritten Getriebeelements 18 des Hemmungsgetriebes 15 des Stellantriebs 1 zu unterschiedlichen Zeitpunkten während eines ersten Startbetriebs gezeigt. Der Stellantrieb 1 kann gemäß dem in Figur 1 und/oder Figur 2 dargestellten Stellantrieb 1 ausgebildet sein, wobei die jeweiligen Merkmale einzeln oder in beliebiger Kombination vorhanden sein können.

In Figur 3a liegt die erste Zahnflanke 33 des zweiten Getriebeelements 16 der drehfesten Einheit 23 an der ersten Zahnflanke 34 des dritten Getriebeelements 18 an. In diesem Fall kann zwischen diesen beiden ersten Zahnflanken 33, 34 eine Blockade ausgebildet sein. Die Durchführung des ersten Startbetriebs kann aber auch sinnvoll sein, wenn die beiden Zahnflanken 33, 34 einen kleinen Abstand voneinander aufweisen.

Zur Lösung und/oder Vermeidung dieser Blockade wird in dem ersten Startbetrieb zuerst der Hemmungsmotor 13 von der Steuerungseinheit 29 angesteuert und/oder bestromt und erst anschließend der Antriebsmotor 3. Dies erfolgt gemäß Figur 3b in einer durch einen Pfeil angedeuteten ersten Drehrichtung 37 des dritten Getriebeelements 18. Hierdurch wird die erste Zahnflanke 34 des dritten Getriebeelements 18 von der ersten Zahnflanke 33 des zweiten Getriebeelements 16 wegbewegt. Die technische Wirkung besteht darin, dass durch diese Ansteuerung die Blockade gelöst und/oder vermieden wird.

Gemäß Figur 3c wird nach einem ersten Zeitfenster auch der Antriebsmotor 3 von der Steuerungseinheit 29 angesteuert und/oder bestromt. Das erste Zeitfenster ist derart festgelegt und/oder derart von der Steuerungseinheit 29 bestimmt, dass die Drehung des zweiten Getriebeelements 16 beginnt, bevor eine zweite Zahnflanke 36 des dritten Getriebeelements 18 mit einer zweiten Zahnflanke 35 des zweiten Getriebeelements 16 kollidiert. Die Ansteuerung erfolgt derart, dass sich die drehfeste Einheit 23 bzw. das zweite Getriebeelement 16, wie in Figur 3c durch einen weiteren Pfeil angedeutet, in eine erste Drehrichtung 39 des zweiten Getriebeelements 16 bewegt. Hierdurch eilt die erste Zahnflanke 33 des zweiten Getriebeelements 16 der ersten Zahnflanke 34 des dritten Getriebeelements 18 nach. Da sich das dritte Getriebeelement 18 weiterhin in seiner ersten Drehrichtung 37 bewegt, geht der erste Startbetrieb nunmehr fließend in den Normalbetrieb über, der bereits vorstehend erläutert wurde.

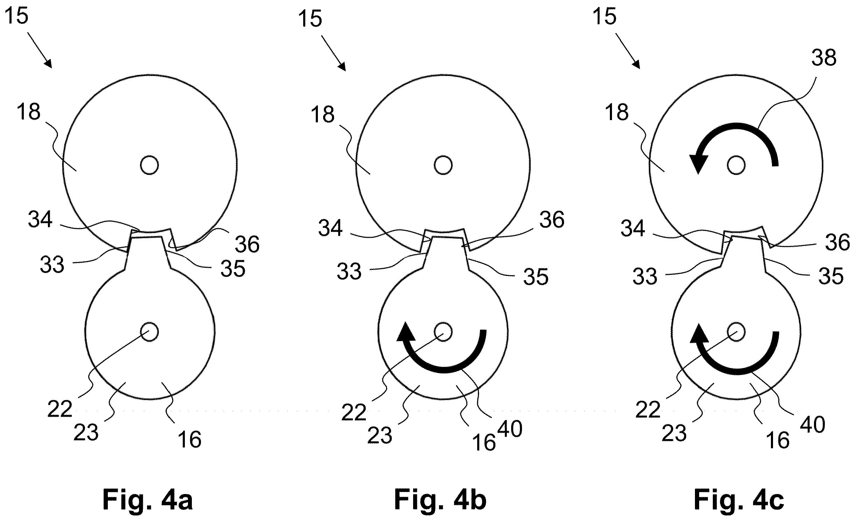

In den Figuren 4a, 4b, 4c ist eine schematische Schnittansicht des zweiten Getriebeelements 16 der drehfesten Einheit 23 und des dritten Getriebeelements 18 des Hemmungsgetriebes 15 des Stellantriebs 1 zu unterschiedlichen Zeitpunkten während eines zweiten Startbetriebs gezeigt. In Figur 4a liegt die erste Zahnflanke 33 des zweiten Getriebeelements 16 der drehfesten Einheit 23 an der ersten Zahnflanke 34 des dritten Getriebeelements 18 an. In diesem Fall kann zwischen diesen beiden ersten Zahnflanken 33, 34, wie bereits vorstehend erläutert, eine Blockade ausgebildet sein. Die Durchführung des zweiten Startbetriebs kann aber auch sinnvoll sein, wenn die beiden Zahnflanken 33, 34 einen kleinen Abstand voneinander aufweisen.

Zur Lösung und/oder Vermeidung dieser Blockade wird in dem zweiten Startbetrieb zuerst der Antriebsmotor 3 von der Steuerungseinheit 29 angesteuert und/oder bestromt und erst anschließend der Hemmungsmotor 13. Dies erfolgt gemäß Figur 4b in einer durch einen Pfeil angedeuteten zweiten Drehrichtung 40 des zweiten Getriebeelements 16. Hierdurch wird die erste Zahnflanke 33 des zweiten Getriebeelements 16 von der ersten Zahnflanke 34 des dritten Getriebeelements 18 wegbewegt. Die Folge ist, dass durch diese Ansteuerung die Blockade gelöst und/oder vermieden wird.

Gemäß Figur 4c wird nach einem zweiten Zeitfenster auch der Hemmungsmotor 13 von der Steuerungseinheit 29 angesteuert und/oder bestromt. Das erste und zweite Zeitfenster kann gleich oder unterschiedlich sein. Das zweite Zeitfenster ist derart festgelegt und/oder derart von der Steuerungseinheit 29 bestimmt, dass die Drehung des dritten Getriebeelements 18 beginnt, bevor die zweite Zahnflanke 35 des zweiten Getriebeelements 16 mit der zweiten Zahnflanke 36 des dritten Getriebeelements 18 kollidiert. Die Ansteuerung erfolgt derart, dass sich das dritte Getriebeelement 18, wie in Figur 4c durch einen weiteren Pfeil angedeutet, in eine zweite Drehrichtung 38 des dritten Getriebeelements 18 bewegt. Hierdurch eilt die erste Zahnflanke 34 des dritten Getriebeelements 18 der sich wegbewegenden ersten Zahnflanke 33 des zweiten Getriebeelements 16 nach. Da sich das zweite Getriebeelement 16 weiterhin in seiner zweiten Drehrichtung 40 bewegt, geht der zweite Startbetrieb nunmehr fließend in den Normalbetrieb über, der bereits vorstehend erläutert wurde.

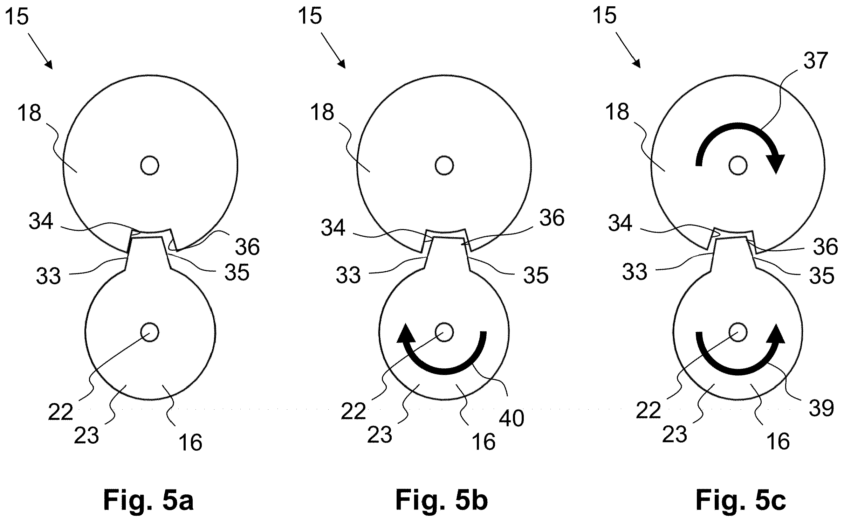

In den Figuren 5a, 5b, 5c ist eine schematische Schnittansicht des zweiten Getriebeelements 16, der drehfesten Einheit 23 und des dritten Getriebeelements 18 des Hemmungsgetriebes 15 des Stellantriebs 1 zu unterschiedlichen Zeitpunkten während eines alternativen zweiten Startbetriebs gezeigt. In Figur 5a liegt die erste Zahnflanke 33 des zweiten Getriebeelements 16 der drehfesten Einheit 23 an der ersten Zahnflanke 34 des dritten Getriebeelements 18 an. In diesem Fall kann zwischen diesen beiden ersten Zahnflanken 33, 34, wie bereits vorstehend erläutert, eine Blockade ausgebildet sein. Die Durchführung des alternativen zweiten Startbetriebs kann aber auch sinnvoll sein, wenn die beiden Zahnflanken 33, 34 einen kleinen Abstand voneinander aufweisen.

Zur Lösung und/oder Vermeidung dieser Blockade wird in dem in Figur 5a, 5b, 5c dargestellten alternativen zweiten Startbetrieb, wie auch bei der in Figur 4a, 4b, 4c dargestellten ersten Variante des zweiten Startbetriebs, zuerst der Antriebsmotor 3 von der Steuerungseinheit 29 angesteuert. Erst anschließend wird der Hemmungsmotor 13 angesteuert und/oder bestromt. Dies erfolgt gemäß Figur 5b, wie auch gemäß Figur 4b, in der durch den Pfeil angedeuteten zweiten Drehrichtung 40 des zweiten Getriebeelements 16. Hierdurch wird die erste Zahnflanke 33 des zweiten Getriebeelements 16 von der ersten Zahnflanke 34 des dritten Getriebeelements 18 wegbewegt. Infolgedessen wird die Blockade gelöst und/oder vermieden.

Im Unterschied zu der in Figur 4a, 4b, 4c dargestellten Abfolge des zweiten Startbetriebs wird gemäß Figur 5c nach einem dritten Zeitfenster der Antriebsmotor 3 derart angesteuert und/oder bestromt, dass sich die Drehrichtung des zweiten Getriebeelements 16 und/oder die Drehrichtung der drehfesten Einheit 23 umkehrt. Das dritte Zeitfenster entspricht dem zweiten Zeitfenster oder ist kürzer als das zweite Zeitfenster ausgebildet. Zusätzlich oder alternativ ist das dritte Zeitfenster hierbei derart gewählt, dass die Drehrichtung umgekehrt wird, bevor die zweite Zahnflanke 35 des zweiten Getriebeelements 16 gegen die zweite Zahnflanke 36 des dritten Getriebeelements 18 stößt.

Gemäß Figur 5c wird entweder zeitgleich mit oder nach der Drehrichtungsumkehr des zweiten Getriebeelements 16, nämlich nach dem zweiten Zeitfenster, auch der Hemmungsmotor 13 von der Steuerungseinheit 29 angesteuert und/oder bestromt. Das zweite und dritte Zeitfenster kann gleich oder unterschiedlich sein, wobei vorzugsweise das zweite Zeitfenster länger als das dritte Zeitfenster ist. Das zweite Zeitfenster ist derart festgelegt und/oder derart von der Steuerungseinheit 29 bestimmt, dass die Drehung des dritten Getriebeelements 18 beginnt, bevor die erste Zahnflanke 33 des zweiten Getriebeelements 16 mit der ersten Zahnflanke 34 des dritten Getriebeelements 18 kollidiert. Die Ansteuerung erfolgt derart, dass sich das dritte Getriebeelement 18, wie in Figur 5c durch einen weiteren Pfeil angedeutet, in die erste Drehrichtung 37 des dritten Getriebeelements 18 bewegt. Hierdurch eilt die erste Zahnflanke 34 des dritten Getriebeelements 18 der sich hinbewegenden ersten Zahnflanke 33 des zweiten Getriebeelements 16 voraus. Des Weiteren eilt die zweite Zahnflanke 36 des dritten Getriebeelements 18 der zweiten Zahnflanke 35 des zweiten Getriebeelements 16 nach. Da sich das zweite Getriebeelement 16 weiterhin in seiner ersten Drehrichtung 39 bewegt, geht der zweite Startbetrieb auch bei dieser Ansteuerung nunmehr fließend in den Normalbetrieb über, der bereits vorstehend erläutert wurde.

Der erste Startbetrieb gemäß den Figuren 3a, 3b, 3c, der zweite Startbetrieb gemäß den Figuren 4a, 4b, 4c und/oder der zweite Startbetrieb gemäß den Figuren 5a, 5b, 5c kann auch analog in die entgegengesetzte Drehrichtung beginnend gestartet werden, wenn die zweite Zahnflanke 35 des zweiten Getriebeelements 16 an der zweiten Zahnflanke 36 des dritten Getriebeelements 18 anliegt oder unmittelbar benachbart zu dieser angeordnet ist, so dass zwischen diesen eine Blockade vorliegt oder mit hoher Wahrscheinlichkeit entstehen wird, wenn gleich im Normalbetrieb gestartet wird.

Des Weiteren ist es vorteilhaft, wenn zuerst der erste Startbetrieb gemäß den Figuren 3a, 3b, 3c durchgeführt wird, und erst anschließend, wenn der erste Startbetrieb nicht erfolgreich war, der zweite Startbetrieb gemäß den Figuren 4a, 4b, 5c und/oder den Figuren 5a, 5b, 5c durchgeführt wird. Alternativ kann dies auch umgekehrt erfolgen.

Zum Vermeiden und/oder Lösen einer Blockade des Hemmungsgetriebes 15 wird der erste und/oder zweite Startbetrieb, vorzugsweise gemäß der vorangegangenen Beschreibung, insbesondere beim erneuten Starten nach einem Stillstand und/oder bei einer Drehrichtungsumkehr des Stellantriebs 1 durchgeführt. Wenn als erstes der erste Startbetrieb durchgeführt wird, kann anschließend auch der zweite Startbetrieb durchgeführt werden. Ebenso ist es möglich, dass zuerst der zweite Startbetrieb und anschließend der erste Startbetrieb durchgeführt werden. Auch ist es vorteilhaft, wenn zumindest einer der Startbetriebe nur dann durchgeführt wird, wenn ein Stromgrenzwert, insbesondere unmittelbar nach dem Start, unmittelbar nach der Drehrichtungsumkehr und/oder unmittelbar vor dem letzten Stillstand, überschritten wurde. Unter dem Begriff "unmittelbar" ist in dem vorstehenden Zusammenhang ein definiertes Zeitfenster zu verstehen, das insbesondere kürzer als zwei Sekunden ist. Zusätzlich oder alternativ ist es vorteilhaft, wenn der zumindest eine Startbetrieb nur dann durchgeführt wird, wenn über den Sensor 32 mittelbar oder unmittelbar eine Blockade erfasst wurde und/oder eine ermittelte Wahrscheinlichkeit für eine Blockade sehr wahrscheinlich ist. Dies kann, wie bereits vorstehend erläutert, dann der Fall sein, wenn eine Ist-Stellung des zweiten Getriebeelements 16 und/oder des dritten Getriebeelements 18 innerhalb des in der Steuereinheit 29 hinterlegten Startbetriebsbereichs ist.

### Bezugszeichenliste

- 1: Stellantrieb
- 2: Antriebsstrang
- 3: Antriebsmotor
- 4: erste Motorwelle
- 5: Antriebsgetriebe
- 6: Motorritzel
- 7: erstes Getriebeelement
- 8: erste Verzahnung
- 9: Abtriebswelle
- 10: viertes Getriebeelement
- 11: fünftes Getriebeelement
- 12: Hemmungseinheit
- 13: Hemmungsmotor
- 14: zweite Motorwelle
- 15: Hemmungsgetriebe
- 16: zweites Getriebeelement
- 17: Schneckenrad
- 18: drittes Getriebeelement
- 19: Schnecke
- 20: zweite Verzahnung
- 21: dritte Verzahnung
- 22: gemeinsame Drehachse
- 23: drehfeste Einheit
- 24: erster Lagerbereich
- 25: zweiter Lagerbereich
- 26: erstes Lagerelement
- 27: zweites Lagerelement
- 28: Gehäuse
- 29: Steuerungseinheit
- 30: erste elektrische Leitung
- 31: zweite elektrische Leitung
- 32: Sensor
- 33: erste Zahnflanke des zweiten Getriebeelements
- 34: erste Zahnflanke des dritten Getriebeelements
- 35: zweite Zahnflanke des zweiten Getriebeelements
- 36: zweite Zahnflanke des dritten Getriebeelements
- 37: erste Drehrichtung des dritten Getriebeelements
- 38: zweite Drehrichtung des dritten Getriebeelements
- 39: erste Drehrichtung des zweiten Getriebeelements
- 40: zweite Drehrichtung des zweiten Getriebeelements

## Patentansprüche

1. Stellantrieb (1) für eine elektrische Baueinheit eines Kraftfahrzeuges mit einem Antriebsstrang (2),
der ein Antriebsgetriebe (5) und einen Antriebsmotor (3) zum Antreiben des Antriebsgetriebes (5) umfasst,
mit einer Hemmungseinheit (12) zum Hemmen des Antriebsstrangs (2),
die ein selbsthemmendes Hemmungsgetriebe (15), das mit dem Antriebsgetriebe (5) in Wirkverbindung steht, und einen Hemmungsmotor (13) zum Antreiben des Hemmungsgetriebes (15) umfasst, und
mit einer Steuerungseinheit (29) zum Steuern des Antriebsmotors (3) und des Hemmungsmotors (13), die derart ausgebildet ist, dass der Antriebsmotor (3) und der Hemmungsmotor (13) zeitversetzt betreibbar sind,
**dadurch gekennzeichnet,**
**dass** die Steuerungseinheit (29) derart ausgebildet ist, dass diese in einem zweiten Startbetrieb zum Vermeiden oder Lösen einer Blockade des Hemmungsgetriebes (15) zuerst den Antriebsmotor (3) ansteuert und erst nach einem, insbesondere in der Steuerungseinheit (29) abgespeicherten oder von der Steuerungseinheit (29) festgelegten, zweiten Zeitfenster zusätzlich den Hemmungsmotor (13) ansteuert.

2. Stellantrieb nach dem ersten Anspruch, **dadurch gekennzeichnet, dass** die Steuerungseinheit (29) derart ausgebildet ist, dass der Antriebsmotor (3) und der Hemmungsmotor (13) in einem Normalbetrieb synchron und/oder zeitgleich betreibbar sind.

3. Stellantrieb nach dem vorherigen Anspruch 2, **dadurch gekennzeichnet, dass** die Steuerungseinheit (29) derart ausgebildet ist, dass der Antriebsmotor (3) und der Hemmungsmotor (13) beim erneuten Starten nach einem Stillstand oder bei einer Drehrichtungsumkehr des Stellantriebs (1) zuerst in dem zweiten Startbetrieb und anschließend in dem Normalbetrieb zum Stellen der Baueinheit betreibbar sind.

4. Stellantrieb nach einem der vorherigen Ansprüche 2 bis 3, **dadurch gekennzeichnet, dass** das Hemmungsgetriebe (15) ein drittes Getriebeelement (18) umfasst und/oder
dass ein erstes Getriebeelement (7) und ein zweites Getriebeelement (16) gemeinsam als eine drehfeste Einheit (23) ausgebildet sind und dass die drehfeste Einheit (23) drehbar um eine gemeinsame Drehachse (22) gelagert ist.

5. Stellantrieb nach dem vorherigen Anspruch 4, **dadurch gekennzeichnet, dass** die Steuerungseinheit (29) derart ausgebildet ist, dass diese im Normalbetrieb den Hemmungsmotor (13) derart betreibt, dass eine erste Zahnflanke (34) des dritten Getriebeelements (18) des Hemmungsgetriebes (15) einer korrespondierenden ersten Zahnflanke (33) des zweiten Getriebeelements (16) vorauseilt und dass eine zweite Zahnflanke (36) des dritten Getriebeelements (18) einer korrespondierenden zweiten Zahnflanke (35) des zweiten Getriebeelements (16) nacheilt.

6. Stellantrieb nach dem vorherigen Anspruch 4 bis 5, **dadurch gekennzeichnet, dass** die Steuerungseinheit (29) derart ausgebildet ist, dass diese in einem ersten Startbetrieb zum Vermeiden oder Lösen der Blockade des Hemmungsgetriebes (15) zuerst den Hemmungsmotor (13) bestromt und erst nach einem, insbesondere in der Steuerungseinheit (29) abgespeicherten oder von der Steuerungseinheit (29) festgelegten, ersten Zeitfenster den Antriebsmotor (3) bestromt.

7. Stellantrieb nach dem vorherigen Anspruch 6, **dadurch gekennzeichnet, dass** der Hemmungsmotor (13) im ersten Startbetrieb zuerst derart bestromt wird,
dass das dritte Getriebeelement (18) in eine Drehrichtung (37) gedreht wird, die zu einer geplanten Stellbewegung des Stellantriebs (1) korrespondiert, sodass sich diejenige Zahnflanke (34, 36) des dritten Getriebeelements (18), die sich benachbart zur oder im Kontakt mit der korrespondierenden Zahnflanke (33, 35) des zweiten Getriebeelements (16) befindet, von dieser korrespondierenden Zahnflanke (33, 35) des zweiten Getriebeelements (16) wegbewegt.

8. Stellantrieb nach dem vorherigen Anspruch 7, **dadurch gekennzeichnet, dass** der Antriebsmotor (3) im ersten Startbetrieb nach dem ersten Zeitfenster derart bestromt wird, dass das zweite Getriebeelement (16) in eine Drehrichtung (39) gedreht wird, die zu der geplanten Stellbewegung des Stellantriebs (1) korrespondiert, sodass die Zahnflanke (33) des zweiten Getriebeelements (16) der korrespondierenden und sich wegbewegenden Zahnflanke (34) des dritten Getriebeelements (18) nacheilt.

9. Stellantrieb nach dem vorherigen Anspruch 8, **dadurch gekennzeichnet, dass** das erste Zeitfenster derart festgelegt ist, oder derart von der Steuerungseinheit (29) bestimmt wird, dass die Drehung des zweiten Getriebeelementes (16) beginnt, bevor die andere, sich hinbewegende Zahnflanke (36) des dritten Getriebeelements (18) mit der korrespondierenden Zahnflanke (35) des zweiten Getriebeelements (16) kollidiert.

10. Stellantrieb nach einem der vorherigen Ansprüche 4 bis 9, **dadurch gekennzeichnet, dass** die Steuerungseinheit (29) derart ausgebildet ist, dass diese in dem zweiten Startbetrieb zum Vermeiden oder Lösen der Blockade des Hemmungsgetriebes (15) gleichzeitig mit oder nach dem Bestromen des Hemmungsmotors (13) die Drehrichtung des Antriebsmotors (3) umkehrt.

11. Stellantrieb nach einem der vorherigen Ansprüche 4 bis 10, **dadurch gekennzeichnet, dass** der Antriebsmotor (3) im zweiten Startbetrieb zuerst derart bestromt wird, dass das zweite Getriebeelement (16) in eine Drehrichtung (39, 40) gedreht wird, die zu der geplanten Stellbewegung des Stellantriebs (1) korrespondiert oder zu dieser entgegengesetzt ist,
sodass sich diejenige Zahnflanke (33) des zweiten Getriebeelements (16), die sich benachbart zu oder im Kontakt mit der korrespondierenden Zahnflanke (34) des dritten Getriebeelements (18) befindet, von der korrespondierenden Zahnflanke (34) des dritten Getriebeelements (18) wegbewegt.

12. Stellantrieb nach einem der vorherigen Ansprüche 4 bis 11, **dadurch gekennzeichnet, dass** der Antriebsmotor (3) im zweiten Startbetrieb, wenn das zweite Getriebeelement (16) in eine zur geplanten Stellbewegung des Stellantriebs (1) entgegengesetzte Drehrichtung (40) gedreht wurde, anschließend derart bestromt wird, dass sich seine Drehrichtung umkehrt, sodass sich das zweite Getriebeelement (16) in die zur geplanten Stellbewegung des Stellantriebs (1) korrespondierende Drehrichtung (39) dreht.

13. Stellantrieb nach einem der vorherigen Ansprüche 4 bis 12, **dadurch gekennzeichnet, dass** der Hemmungsmotor (13) im zweiten Startbetrieb nach dem zweiten Zeitfenster derart bestromt wird, dass das dritte Getriebeelement (18) in eine Drehrichtung (37, 38) gedreht wird, die zu der geplanten Stellbewegung des Stellantriebs (1) korrespondiert, sodass die Zahnflanke (34, 36) des dritten Getriebeelements (18) der korrespondierenden und sich wegbewegenden Zahnflanke (33, 35) des zweiten Getriebeelements (16) nacheilt.

14. Stellantrieb nach einem der vorherigen Ansprüche 4 bis 13, **dadurch gekennzeichnet, dass** das zweite Zeitfenster derart festgelegt ist, oder derart von der Steuerungseinheit (29) bestimmt wird, dass die Drehung des dritten Getriebeelementes (18) beginnt, bevor die andere, sich hinbewegende Zahnflanke (35) des zweiten Getriebeelements (16) mit der korrespondierenden Zahnflanke (36) des dritten Getriebeelements (18) kollidiert.

## Claims

1. Actuating drive (1) for an electrical assembly unit of a motor vehicle having a drive train (2),
which comprises a drive transmission (5) and a drive motor (3) for driving the drive transmission (5),
having an inhibition unit (12) for inhibiting the drive train (2),
which comprises a self-inhibiting inhibition transmission (15), which is operatively connected to the drive transmission (5), and an inhibition motor (13) for driving the inhibition transmission (15), and
having a control unit (29) for controlling the drive motor (3) and the inhibition motor (13), which control unit is designed in such a way that the drive motor (3) and the inhibition motor (13) can be operated with a time offset,
**characterized in that**
the control unit (29) is designed in such a way that, in a second starting operation for preventing or releasing a blockage of the inhibition transmission (15), said control unit first controls the drive motor (3) and only additionally controls the inhibition motor (13) after a second time window, which is stored in particular in the control unit (29) or is defined by the control unit (29).

2. Actuating drive according to the first claim, **characterized in that** the control unit (29) is designed in such a way that the drive motor (3) and the inhibition motor (13) can be operated synchronously and/or simultaneously in a normal operation.

3. Actuating drive according to the preceding claim 2, **characterized in that** the control unit (29) is designed in such a way that the drive motor (3) and the inhibition motor (13), when starting again after a standstill or when the direction of rotation of the actuating drive (1) is reversed, can be operated first in the second starting operation and then in the normal operation for adjusting the assembly unit.

4. Actuating drive according to one of the preceding claims 2 to 3, **characterized in that** the inhibition transmission (15) comprises a third transmission element (18), and/or
**in that** a first transmission element (7) and a second transmission element (16) are designed jointly as a rotationally fixed unit (23), and **in that** the rotationally fixed unit (23) is mounted rotatably about a common axis of rotation (22).

5. Actuating drive according to the preceding claim 4, **characterized in that** the control unit (29) is designed in such a way that, in normal operation, said control unit operates the inhibition motor (13) in such a way that a first tooth flank (34) of the third transmission element (18) of the inhibition transmission (15) leads a corresponding first tooth flank (33) of the second transmission element (16), and **in that** a second tooth flank (36) of the third transmission element (18) trails a corresponding second tooth flank (35) of the second transmission element (16).

6. Actuating drive according to the preceding claim 4 to 5, **characterized in that** the control unit (29) is designed in such a way that, in a first starting operation for preventing or releasing the blockage of the inhibition transmission (15), said control unit first energizes the inhibition motor (13) and only energizes the drive motor (3) after a first time window, which is stored in particular in the control unit (29) or is defined by the control unit (29).

7. Actuating drive according to the preceding claim 6, **characterized in that**, in the first starting operation, the inhibition motor (13) is first energized in such a way that
the third transmission element (18) is rotated in a direction of rotation (37) which corresponds to a planned actuating movement of the actuating drive (1), such that that tooth flank (34, 36) of the third transmission element (18) which is located adjacent to or in contact with the corresponding tooth flank (33, 35) of the second transmission element (16) moves away from said corresponding tooth flank (33, 35) of the second transmission element (16).

8. Actuating drive according to the preceding claim 7, **characterized in that**, in the first starting operation, the drive motor (3) is energized after the first time window in such a way that the second transmission element (16) is rotated in a direction of rotation (39) which corresponds to the planned actuating movement of the actuating drive (1), such that the tooth flank (33) of the second transmission element (16) trails the corresponding tooth flank (34), which moves away, of the third transmission element (18).

9. Actuating drive according to the preceding claim 8, **characterized in that** the first time window is defined in such a way or is determined by the control unit (29) in such a way that the rotation of the second transmission element (16) begins before the other, moving tooth flank (36) of the third transmission element (18) collides with the corresponding tooth flank (35) of the second transmission element (16).

10. Actuating drive according to one of the preceding claims 4 to 9, **characterized in that** the control unit (29) is designed in such a way that, in the second starting operation for preventing or releasing the blockage of the inhibition transmission (15), said control unit reverses the direction of rotation of the drive motor (3) simultaneously with or after energizing the inhibition motor (13).

11. Actuating drive according to one of the preceding claims 4 to 10, **characterized in that**, in the second starting operation, the drive motor (3) is first energized in such a way that the second transmission element (16) is rotated in a direction of rotation (39, 40) which corresponds to the planned actuating movement of the actuating drive (1) or is opposite thereto,
such that that tooth flank (33) of the second transmission element (16) which is located adjacent to or in contact with the corresponding tooth flank (34) of the third transmission element (18) moves away from the corresponding tooth flank (34) of the third transmission element (18).

12. Actuating drive according to one of the preceding claims 4 to 11, **characterized in that**, in the second starting operation, when the second transmission element (16) has been rotated in a direction of rotation (40) which is opposite to the planned actuating movement of the actuating drive (1), the drive motor (3) is then energized in such a way that its direction of rotation is reversed, such that the second transmission element (16) rotates in the direction of rotation (39) which corresponds to the planned actuating movement of the actuating drive (1).

13. Actuating drive according to one of the preceding claims 4 to 12, **characterized in that**, in the second starting operation, the inhibition motor (13) is energized after the second time window in such a way that the third transmission element (18) is rotated in a direction of rotation (37, 38) which corresponds to the planned actuating movement of the actuating drive (1), such that the tooth flank (34, 36) of the third transmission element (18) trails the corresponding tooth flank (33, 35), which moves away, of the second transmission element (16).

14. Actuating drive according to one of the preceding claims 4 to 13, **characterized in that** the second time window is defined in such a way or is determined by the control unit (29) in such a way that the rotation of the third transmission element (18) begins before the other, moving tooth flank (35) of the second transmission element (16) collides with the corresponding tooth flank (36) of the third transmission element (18).

## Revendications

1. Actionneur (1) pour une unité d'assemblage électrique d'un véhicule automobile comprenant une chaîne cinématique (2),
qui comprend une transmission d'entraînement (5) et un moteur d'entraînement (3) pour entraîner la transmission d'entraînement (5),
comprenant une unité d'inhibition (12) pour inhiber la chaîne cinématique (2), qui comprend une transmission d'inhibition auto-inhibant (15), qui est en liaison fonctionnelle avec la transmission d'entraînement (5), et un moteur d'inhibition (13) pour entraîner la transmission d'inhibition (15), et
comprenant une unité de contrôle (29) pour contrôler le moteur d'entraînement (3) et le moteur d'inhibition (13), qui est conçue de telle sorte que le moteur d'entraînement (3) et le moteur d'inhibition (13) peuvent fonctionner de manière décalée dans le temps,
**caractérisé en ce que**
l'unité de contrôle (29) est conçue de telle sorte que, dans un deuxième mode de démarrage, pour éviter ou relâcher un blocage de la transmission d'inhibition (15), celle-ci commande d'abord le moteur d'entraînement (3) et ne commande en outre le moteur d'inhibition (13) qu'après une deuxième fenêtre temporelle, en particulier mémorisée dans l'unité de contrôle (29) ou définie par l'unité de contrôle (29).

2. Actionneur selon la première revendication, **caractérisé en ce que** l'unité de contrôle (29) est conçue de telle sorte que le moteur d'entraînement (3) et le moteur d'inhibition (13) peuvent fonctionner de manière synchrone et/ou simultanée dans un fonctionnement normal.

3. Actionneur selon la revendication précédente 2, **caractérisé en ce que** l'unité de contrôle (29) est conçue de telle sorte que le moteur d'entraînement (3) et le moteur d'inhibition (13), lors d'un nouveau démarrage après un arrêt ou lors d'une inversion de sens de rotation de l'actionneur (1), peuvent fonctionner d'abord dans le deuxième mode de démarrage et ensuite dans le fonctionnement normal pour régler l'unité d'assemblage.

4. Actionneur selon l'une quelconque des revendications précédentes 2 à 3, **caractérisé en ce que** la transmission d'inhibition (15) comprend un troisième élément de transmission (18) et/ou
**en ce qu'**un premier élément de transmission (7) et un deuxième élément de transmission (16) sont conçus conjointement sous la forme d'une unité solidaire en rotation (23) et **en ce que** l'unité solidaire en rotation (23) est montée de manière rotative autour d'un axe de rotation commun (22).

5. Actionneur selon la revendication précédente 4, **caractérisé en ce que** l'unité de contrôle (29) est conçue de telle sorte que, dans le fonctionnement normal, celle-ci fait fonctionner le moteur d'inhibition (13) de telle sorte qu'un premier flanc de dent (34) du troisième élément de transmission (18) de la transmission d'inhibition (15) précède un premier flanc de dent correspondant (33) du deuxième élément de transmission (16) et **en ce qu'**un deuxième flanc de dent (36) du troisième élément de transmission (18) suit un deuxième flanc de dent correspondant (35) du deuxième élément de transmission (16).

6. Actionneur selon les revendications précédentes 4 à 5, **caractérisé en ce que** l'unité de contrôle (29) est conçue de telle sorte que, dans un premier mode de démarrage, pour éviter ou relâcher le blocage de la transmission d'inhibition (15), celle-ci alimente d'abord le moteur d'inhibition (13) et n'alimente le moteur d'entraînement (3) qu'après une première fenêtre temporelle, en particulier mémorisée dans l'unité de contrôle (29) ou définie par l'unité de contrôle (29).

7. Actionneur selon la revendication précédente 6, **caractérisé en ce que**, dans le premier mode de démarrage, le moteur d'inhibition (13) est alimenté d'abord de telle sorte que
le troisième élément de transmission (18) est tourné dans un sens de rotation (37) qui correspond à un mouvement d'actionnement planifié de l'actionneur (1), de telle sorte que le flanc de dent (34, 36) du troisième élément de transmission (18) qui se trouve à proximité ou en contact avec le flanc de dent correspondant (33, 35) du deuxième élément de transmission (16) s'éloigne de ce flanc de dent correspondant (33, 35) du deuxième élément de transmission (16).

8. Actionneur selon la revendication précédente 7, **caractérisé en ce que**, dans le premier mode de démarrage, le moteur d'entraînement (3) est alimenté après la première fenêtre temporelle de telle sorte que le deuxième élément de transmission (16) est tourné dans un sens de rotation (39) qui correspond au mouvement d'actionnement planifié de l'actionneur (1), de telle sorte que le flanc de dent (33) du deuxième élément de transmission (16) suit le flanc de dent (34) correspondant et s'éloignant du troisième élément de transmission (18).

9. Actionneur selon la revendication précédente 8, **caractérisé en ce que** la première fenêtre temporelle est définie de telle sorte ou est déterminée par l'unité de contrôle (29) de telle sorte que la rotation du deuxième élément de transmission (16) commence avant que l'autre flanc de dent (36) en mouvement du troisième élément de transmission (18) n'entre en collision avec le flanc de dent correspondant (35) du deuxième élément de transmission (16).

10. Actionneur selon l'une quelconque des revendications précédentes 4 à 9, **caractérisé en ce que** l'unité de contrôle (29) est conçue de telle sorte que, dans le deuxième mode de démarrage, pour éviter ou relâcher le blocage de la transmission d'inhibition (15), celle-ci inverse le sens de rotation du moteur d'entraînement (3) simultanément avec ou après l'alimentation du moteur d'inhibition (13).

11. Actionneur selon l'une quelconque des revendications précédentes 4 à 10, **caractérisé en ce que**, dans le deuxième mode de démarrage, le moteur d'entraînement (3) est alimenté d'abord de telle sorte que le deuxième élément de transmission (16) est tourné dans un sens de rotation (39, 40) qui correspond au mouvement d'actionnement planifié de l'actionneur (1) ou est opposé à celui-ci, de telle sorte que le flanc de dent (33) du deuxième élément de transmission (16) qui se trouve à proximité ou en contact avec le flanc de dent correspondant (34) du troisième élément de transmission (18) s'éloigne du flanc de dent correspondant (34) du troisième élément de transmission (18).

12. Actionneur selon l'une quelconque des revendications précédentes 4 à 11, **caractérisé en ce que**, dans le deuxième mode de démarrage, lorsque le deuxième élément de transmission (16) a été tourné dans un sens de rotation (40) opposé au mouvement d'actionnement planifié de l'actionneur (1), le moteur d'entraînement (3) est ensuite alimenté de telle sorte que son sens de rotation s'inverse, de telle sorte que le deuxième élément de transmission (16) tourne dans le sens de rotation (39) correspondant au mouvement d'actionnement planifié de l'actionneur (1).

13. Actionneur selon l'une quelconque des revendications précédentes 4 à 12, **caractérisé en ce que**, dans le deuxième mode de démarrage, le moteur d'inhibition (13) est alimenté après la deuxième fenêtre temporelle de telle sorte que le troisième élément de transmission (18) est tourné dans un sens de rotation (37, 38) qui correspond au mouvement d'actionnement planifié de l'actionneur (1), de telle sorte que le flanc de dent (34, 36) du troisième élément de transmission (18) suit le flanc de dent correspondant et s'éloignant (33, 35) du deuxième élément de transmission (16).

14. Actionneur selon l'une quelconque des revendications précédentes 4 à 13, **caractérisé en ce que** la deuxième fenêtre temporelle est définie de telle sorte ou est déterminée par l'unité de contrôle (29) de telle sorte que la rotation du troisième élément de transmission (18) commence avant que l'autre flanc de dent (35) en mouvement du deuxième élément de transmission (16) n'entre en collision avec le flanc de dent correspondant (36) du troisième élément de transmission (18).
